# FASCICULE DE BREVET EUROPEEN

(11) **EP 4 061 866 B1**
(45) Date de publication et mention de la délivrance du brevet: **18.02.2026**
(21) Numéro de dépôt: 20820491.7
(22) Date de dépôt: 19.11.2020
(51) Int. Cl.: C08G 18/28, C08G 77/18, C08L 83/04, C08L 83/06, C09J 175/04, C09J 183/06, C09J 183/08

(54) **COMPOSITION RÉTICULABLE À L'HUMIDITÉ À BASE DE POLYMÈRE SILYLÉ**
FEUCHTIGKEITSHÄRTENDE ZUSAMMENSETZUNG VON SILYLIERTEN POLYMEREN
WET CURABLE COMPOSITION BASED ON SILYLATED POLYMER

(30) Priorité: 21.11.2019 FR 1913025
(43) Date de publication de la demande: 28.09.2022
(73) Titulaire: Bostik SA, 92800 Puteaux (FR)
(72) Inventeur: SANZ, Federico, 60280 Venette (FR)
(74) Mandataire: Arkema Patent
(86) Numéro de dépôt international: PCT/FR2020/052133
(87) Numéro de publication internationale: WO 2021/099746

(56) Documents cités:
- FR-A1- 3 052 457
- FR-A1- 3 066 765

## Description

### DOMAINE DE L'INVENTION

La présente invention concerne une composition réticulable à l'humidité à base de polymère silylé.

L'invention concerne également l'utilisation de ladite composition comme adhésif, revêtement ou mastic.

### ARRIERE-PLAN TECHNOLOGIQUE

Dans le domaine de l'automobile, les compositions adhésives sont très utilisées, que ce soit pour fixer les panneaux mobiles tels que les portes, les capots ..., ou encore pour fixer les pare-brise.

Les adhésifs utilisés pour les pare-brise doivent remplir plusieurs fonctions à savoir : avoir une adhésion suffisante à l'interface joint/pare-brise, mais également une bonne étanchéité aux conditions extérieures (eau, température, humidité...).

Dans le domaine des adhésifs, les polymères modifiés silane (« SMP ») sont très utilisés. (FR3052457)

Toutefois, ces adhésifs peuvent présenter l'inconvénient de conduire à des joints adhésifs présentant une perte de leurs propriétés adhésives dans des conditions climatiques contraignantes.

Il existe donc un besoin pour de nouvelles compositions conduisant à un joint adhésif présentant un compromis entre de bonnes propriétés d'adhésion, et une bonne tenue au vieillissement notamment dans des conditions contraignantes de température et d'humidité.

### DESCRIPTION DE L'INVENTION

### Composition

La présente invention concerne une composition réticulable à l'humidité comprenant :
- au moins un polymère (A) comprenant au moins un groupement alcoxysilane ;
- au moins 25% en poids d'au moins une charge carbonatée (B) par rapport au poids total de ladite composition ;
- au moins un composé choisi parmi les bis(alcoxysilane) ou tri(alcoxysilane) (C) ayant une masse molaire allant de 250 à 1 000 g/mol ;
- au moins un catalyseur de réticulation (D) ;
ladite composition étant caractérisée en ce qu'elle comprend une teneur en plastifiant inférieure ou égale à 1% en poids par rapport au poids total de la composition.

De préférence, la teneur en plastifiant est inférieure ou égale à 0,5%, préférentiellement inférieure ou égale à 0,1%, et encore plus préférentiellement la teneur en plastifiant est égale à zéro.

Les plastifiants représentent une classe de composés bien connue de l'homme du métier notamment dans le domaine des compositions adhésives, de revêtement et de mastic. On peut notamment citer les phtalates tels que le dibutyl phtalate, le diisononyl phtalate, le diisodecyl phtalate ; le diisononyl-1,2-cyclohexanedicarboxylate (Hexamoll DINCH disponible chez BASF) ; les esters d'acide gras insaturés (exemple l'oléate de butyle) ; les esters d'alkylsulfonique (tel que le Mesamoll de Lanxess) ; les composés phosphates ; les composés trimétillates ; les huiles hydrocarbonées ; les plastifiants époxy...

Il a en effet été trouvé que la composition objet de l'invention permet avantageusement d'obtenir après réticulation un joint adhésif qui présente de bonnes propriétés mécaniques et présente une bonne tenue au vieillissement notamment dans des conditions contraignantes de température et d'humidité.

### Polymère (A) comprenant au moins un groupement alcoxysilane

Selon un mode de réalisation, le polymère (A) comportant au moins un groupement alkoxysilane est un polymère comprenant au moins un, de préférence au moins deux groupements de formule (I) :

-Si(R⁴)ₚ(OR⁵)₃₋ₚ (I)

dans laquelle :
- R⁴ représente un radical alkyl linéaire ou ramifié comprenant de 1 à 4 atomes de carbone ou un groupe alkoxy comprenant de 1 à 4 atomes de carbone;
- R⁵ représente un radical alkyl linéaire ou ramifié comprenant de 1 à 4 atomes de carbone ou un groupe -N=C(Rⁱ)R^{j} dans laquelle :
   - Rⁱ est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - Rⁱ est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène ;
- p est un nombre entier égal à 0, 1 ou 2.

De préférence, le ou les groupements de formule (I) sont des groupements situés aux extrémités de la chaîne principale du polymère, encore appelés groupements terminaux.

De préférence, les polymères (A) comportant au moins un groupement alkoxysilane sont choisis parmi les polyuréthanes, les polyéthers, et leurs mélanges.

Le polymère (A) comportant au moins un groupement alkoxysilane peut présenter une masse moléculaire moyenne en nombre allant de 500 à 50 000 g/mol, de préférence encore allant de 700 à 20 000 g/mol.

La masse moléculaire moyenne en nombre des polymères peut être mesurée par des méthodes bien connues de l'homme du métier, par exemple par chromatographie d'exclusion stérique en utilisant des étalons de type polyéthylène glycol.

Selon un mode de réalisation, le polymère silylé comportant au moins un groupement alkoxysilane est choisi parmi les polymères de formules (II), (III) ou (IV) telles que définies ci-dessous, et leurs mélanges :

(R⁵O)₃₋ₚ(R⁴)ₚSi-R⁰-[OR²]ₙ-R⁰-Si(R⁴)p(OR⁵)₃₋ₚ (II)

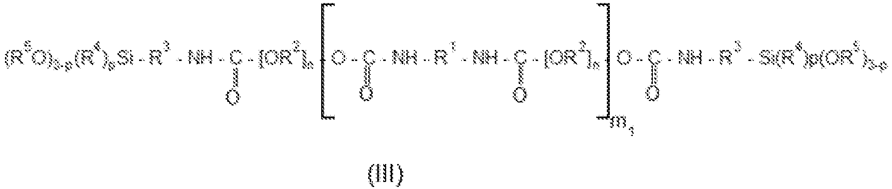

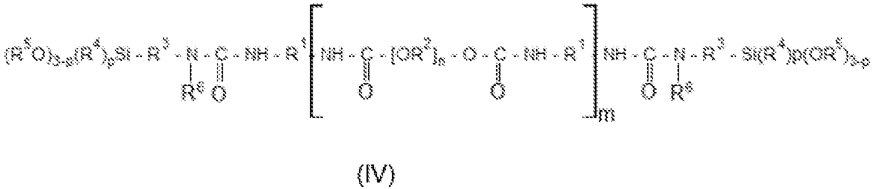

dans lesquelles :
- R¹ représente un radical divalent hydrocarboné comprenant de 5 à 15 atomes de carbone qui peut être aromatique ou aliphatique, linéaire, ramifié ou cyclique,
- R⁰ représente un radical divalent alkylène linéaire ou ramifié comprenant de 3 à 6 atomes de carbone,
- R³ représente un radical divalent alkylène linéaire ou ramifié comprenant de 1 à 6 atomes de carbone, de préférence R³ représentant méthylène ou n-propylène,
- R² représente un radical divalent alkylène linéaire ou ramifié comprenant de 2 à 14 atomes de carbone, de préférence de 2 à 6 atomes de carbone, et encore plus préférentiellement de 2 à 4 atomes de carbone,
- R⁴ représente un radical alkyl linéaire ou ramifié comprenant de 1 à 4 atomes de carbone ou un groupe alkoxy comprenant de 1 à 4 atomes de carbone;
- R⁵ représente un radical alkyl linéaire ou ramifié comprenant de 1 à 4 atomes de carbone ou un groupe -N=C(Rⁱ)R^{j} dans laquelle :
   - R est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - R^{j} est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène ;
- R⁶ représente un atome d'hydrogène, un radical phényle, un radical alkyle linéaire, ramifié ou cyclique comprenant de 1 à 6 atomes de carbone, ou un radical 2-succinate de formule : 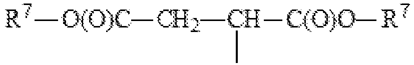 dans laquelle R⁷ est un radical alkyle linéaire ou ramifié comprenant de 1 à 6 atomes de carbone,
- n est un nombre entier tel que la masse moléculaire moyenne en nombre du bloc polyéther de formule -[OR²]ₙ- va de 300 g/mol à 40 000 g/mol dans les polymères de formules (II), (III) et (IV),
- m₁ est zéro ou un nombre entier,
- n et m₁ sont tels que la masse moléculaire moyenne en nombre du polymère de formule (III) va de 500 g/mol à 50 000 g/mol, de préférence de 700 g/mol à 20 000 g/mol,
- m est un nombre entier différent de zéro,
- n et m sont tels que la masse moléculaire moyenne en nombre du polymère de formule (IV) va de 500 g/mol à 50 000 g/mol, de préférence de 700 g/mol à 20 000 g/mol,
- p est un nombre entier égal à 0, 1 ou 2, p étant de préférence 0 ou 1.

De préférence, le radical R¹ des formules (II), (III) et (IV) est choisi parmi l'un des radicaux divalents suivants dont les formules ci-dessous font apparaître les 2 valences libres :
- a) le radical divalent dérivé de l'isophorone diisocyanate (IPDI) : 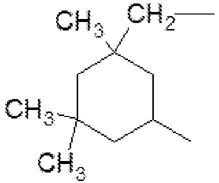
- b) le radical divalent dérivé des 4,4'- et 2,4'-dicyclohexylméthane diisocyanate (HMDI) : 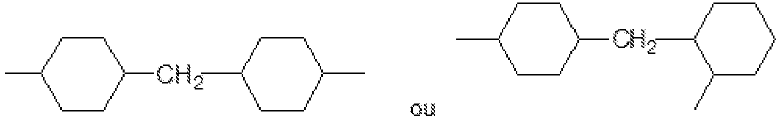
- c) le radical dérivé des 2,4- et 2,6-toluène diisocyanate (TDI) 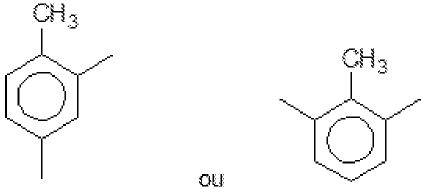
- d) le radical dérivé des 4,4'- et 2,4'-diphénylméthane diisocyanate (MDI) 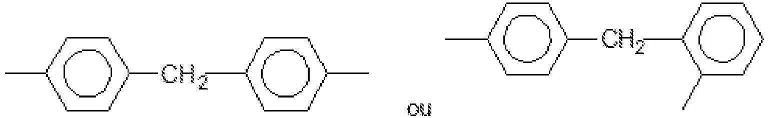
- e) le radical dérivé du m-xylylène diisocyanate (m-XDI) 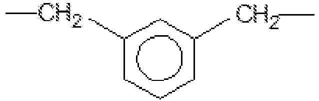
- f) le radical dérivé de l'hexamethylène diisocyanate (HDI)

   -(CH₂)₈-
- g) le radical dérivé d'un allophanate de HDI ayant la formule (Y) suivante : 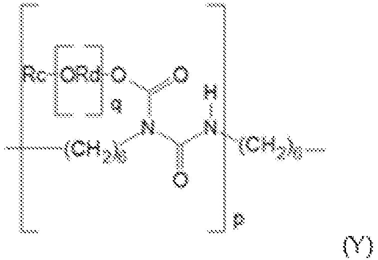 dans laquelle p est un nombre entier allant de 1 à 2, q est un nombre entier allant de 0 à 9, et de préférence 2 à 5, R_{c} représente une chaine hydrocarbonée, saturée ou insaturée, cyclique ou acyclique, linéaire ou ramifiée, comprenant de 1 à 20 atomes de carbone, de préférence de 6 à 14 atomes de carbone, R_{d} représente un groupe divalent alkylène, linéaire ou ramifié, ayant de 2 à 4 atomes de carbones, et de préférence un groupe divalent propylène

De préférence, le radical R¹ des formules (II), (III) et (IV) est le radical divalent dérivé de l'isophorone diisocyanate ou du xylylène diisocyanate.

Les polymères de formule (III) peuvent être obtenus selon un procédé décrit dans les documents EP 2336208 et WO 2009/106699.

Parmi les polymères répondant à la formule (III), on peut par exemple citer :
- GENIOSIL^{®} STP-E10 (disponible auprès de Wacker) : polyéther comprenant deux groupements (I) de type diméthoxy (m₁ égal à 0, p égal à 1 et R⁴ et R⁵ représentent un groupement méthyle) présentant une masse moléculaire moyenne en nombre d'environ 8 889 g/mol où R³ représente un groupement méthylène;
- GENIOSIL^{®} STP-E30 (disponible auprès de Wacker) : polyéther comprenant deux groupements de formule (I) de type diméthoxy (m₁ égal à 0, p égal à 1 et R⁴ et R⁵ représentent un groupement méthyle) présentant une masse moléculaire moyenne en nombre d'environ 14 493 g/mol où R³ représente un groupement méthylène;
- SPUR+^{®} 1050MM (disponible auprès de MOMENTIVE) : polyuréthane comprenant deux groupements de formule (I) de type triméthoxy (m₁ différent de 0, p égal à 0 et R⁵ représente un groupement méthyle) présentant une masse moléculaire moyenne en nombre d'environ 21 000 g/mol où R³ représente un groupement n-propylène ;
- SPUR+^{®} Y-19116 (disponible auprès de MOMENTIVE) : polyuréthane comprenant deux groupements de formule (I) de type triméthoxy (m₁ différent de 0 et R⁵ représente un groupement méthyle) présentant une masse moléculaire moyenne en nombre allant de 15 000 à 17 000 g/mol où R³ représente un groupement n-propylène ;
- DESMOSEAL^{®} S XP 2636 (disponible auprès de BAYER) : polyuréthane comprenant deux groupements de formule (I) de type triméthoxy (m₁ différent de 0, p égal à 0 et R⁵ représente un groupement méthyle) présentant une masse moléculaire moyenne en nombre d'environ 15 038 g/mol où R³ représente un groupement n-propylène.

A titre d'exemple de polymère silylé de formule (III), on peut également citer le GENIOSIL^{®} XB502, produit commercial disponible auprès de WACKER. Ce produit GENIOSIL^{®} XB502 comprend un mélange de deux produits (B) et (C) où
(B) est un polymère de formule (III) de masse moléculaire moyenne en nombre d'environ 14 000 g/mol où m₁ est égal à zéro, p est égal à 1, R⁵ et R⁴ représentent chacun un groupement méthyle, R³ représente un groupement méthylène, et le groupement - [OR²]ₙ- provient d'un polypropylène glycol ;
(C) est un silsesquioxane (A) de masse moléculaire moyenne en nombre d'environ 800 g/mol terminé par des groupements méthoxy (CAS 1211908-05-2),
les produits (B) et (C) étant présents dans un ratio massique (B)/(C) d'environ (25-30)/(70-75).

Les polymères de formule (II) peuvent être obtenus par hydrosilylation de polyéther diallyléther selon un procédé décrit par exemple dans le document EP 1829928.

Parmi les polymères répondant à la formule (II), on peut citer :
- le MS POLYMER^{™} S303H (disponible auprès de KANEKA) correspondant à un polyéther comprenant deux groupements de formule (I) de type diméthoxy (p est égal à 1 et R⁴ représente un groupement méthyle) ayant une masse moléculaire moyenne en nombre d'environ 22 000 g/mol et une viscosité de 12,5 Pa.s à 23°C ;
- le MS POLYMER^{™} S227 (disponible auprès de KANEKA) correspondant à un polyéther comprenant deux groupements de formule (I) de type diméthoxy (p est égal à 1, R⁵ et R⁴ représentent chacun un groupement méthyle) ayant une masse moléculaire moyenne en nombre d'environ 27 000 g/mol, et une viscosité de 34 Pa.s à 23°C.

Les polymères de formule (IV) peuvent être obtenus selon le procédé suivant :
a)réaction d'un polyéther polyol de formule suivante : 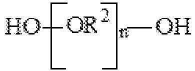 avec une excès stoechiométrique de diisocyanate de formule suivante: NCO-R¹-NCO pour former un bloc polyuréthane-polyéther ayant au moins deux groupes terminaux - NCO, ledit bloc comprenant de préférence de 1,5% à 1,9% en poids de groupement -NCO, et puis
b)réaction entre un bloc obtenu à l'étape précédente avec une quantité stoechiométrique ou un léger excès d'une α-, β- ou γ-aminosilane ayant la formule suivante :

   (R⁶O)₃₋ₚ(R⁴)ₚSi-R³-NHR⁶

Un tel procédé est par exemple décrit dans WO 2013/136108.

Parmi les polymères répondant à la formule (IV), on peut citer :
- le SPUR+ 1050 MM (disponible auprès de MOMENTIVE) correspondant à polyuréthane polyéther comprenant deux groupements de formule (I) de type triméthoxy (p est égal à 0, R⁵ représente un groupement méthyle) ayant une masse moléculaire en nombre d'environ 20 000 g/mol et une viscosité de 35 Pa à 23°C ;
- le SPUR+ 1015 LM (disponible auprès de MOMENTIVE) correspondant à un polyuréthane polyéther comprenant deux groupements de formule (I) de type triméthoxy (p est égal à 0, R⁵ représente un groupement méthyle) ayant une masse moléculaire en nombre d'environ 25 000 g/mol et une viscosité de 50 Pa à 23°C.

Selon un mode de réalisation, la composition selon l'invention comprend de 3% à 80% en poids, de préférence de 10% à 60% en poids, préférentiellement de 20% à 60% en poids, avantageusement de 30% à 60% en poids de polymère(s) silylé(s) (A) par rapport au poids total de ladite composition.

Selon un mode de réalisation préféré, les le polymère silylé a la formule (II) susmentionnée, en particulier dans laquelle :
- p est égal à 1 ; et/ou
- R⁴ représente un méthyle.

### Charge carbonatée (B)

Selon un mode de réalisation, la charge carbonatée est choisie parmi les carbonates de métaux alcalin ou alcalino-terreux et leurs mélanges, de préférence la charge carbonatée est le carbonate de calcium.

Le carbonate de calcium peut être rendu hydrophobe, par exemple avec du stéarate de calcium ou un analogue permettant de conférer une hydrophobie partielle ou totale aux particules de carbonate de calcium. Le caractère plus ou moins hydrophobe du carbonate de calcium peut avoir un impact sur la rhéologie de la composition. De plus, le revêtement hydrophobe peut permettre d'empêcher que le carbonate de calcium n'absorbe les constituants de la composition et ne les rende inefficaces. Le revêtement hydrophobe du carbonate de calcium peut représenter de 0,1% à 3,5% en poids, par rapport au poids total de carbonate de calcium.

Le carbonate de calcium qui peut être utilisé dans la présente invention a de préférence une granulométrie allant de 0,1 à 400 µm, de préférence encore de 1 à 400 µm, préférentiellement de 10 à 350 µm, de préférence encore de 50 à 300 µm.

A titre d'exemple de carbonate de calcium, on peut citer le MIKHART^{®} 1T (disponible auprès de la société LA PROVENCALE).

La composition selon l'invention comprend au moins 25% en poids d'au moins une charge carbonatée, de préférence au moins 30% en poids, préférentiellement au moins 40% en poids par rapport au poids total de la composition.

La composition selon l'invention comprend de préférence de 25% à 70% en poids, préférentiellement de 40% à 60% en poids, en particulier de 45% à 55% en poids d'au moins une charge carbonatée, par exemple de carbonate de calcium, par rapport au poids total de ladite composition.

La composition peut comprendre de 0,01 à 20 parties en poids de bis(alcoxysilane)(s) ou tri(alcoxysilane)(s) (C) pour 100 parties de polymère(s) (A), de préférence de 0,1 à 10 parties en poids de bis(alcoxysilane)(s) ou tri(alcoxysilane)(s) (C) pour 100 parties de polymère(s) (A), et encore plus préférentiellement de 1 à 5 parties en poids de bis(alcoxysilane)(s) ou tri(alcoxysilane)(s) (C) pour 100 parties de polymère(s) (A).

### Composé bis(alcoxysilane) ou tri(alcoxysilane) (C)

Le bis(alcoxysilane) ou tri(alcoxysilane) (C) peut avoir la formule (V) suivante :

R⁸-[SiR⁹ₜ(OR¹⁰)₃₋ₜ]ₛ (V)

dans laquelle:
- t représente est un nombre entier égal à 0, 1 ou 2 ;
- s représente un entier égal à 2 ou 3 ;
- R⁸ représente un radical organique ;
- R⁹, identiques ou différents, représente chacun un groupe alkyle en C1-C6 linéaire ou ramifié, ou un groupe -OR¹¹ avec R¹¹ représentant un groupe alkyle en C1-C4 linéaire ou ramifié ;
- R¹⁰, identiques ou différents, représentent chacun un radical alkyle linéaire ou ramifié comprenant de 1 à 4 atomes de carbone ou un groupe -N=C(Rⁱ)R^{j} dans laquelle :
   - Rⁱ est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - R^{j} est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène.

Selon un mode de réalisation préféré, le bis(alcoxysilane) ou tri(alcoxysilane) (C) a une masse molaire allant de 270 à 1000 g/mol, de préférence de 270 à 750 g/mol, préférentiellement de 270 à 600 g/mol.

Selon un mode de réalisation, le bis(alcoxysilane) ou tri(alcoxysilane) (C) a l'une des formules (V-A) ou (V-B) suivantes :

(R¹⁰O)₃₋ₜR⁹ₜSi-R¹²-SiR⁹ₜ(OR¹⁰)₃₋ₜ (V-A)

R¹³-[SiR⁹ₜ(OR¹⁰)₃₋ₜ]₃ (V-B)

dans lesquelles :
- R⁹, R¹⁰, et t sont tels que définis précédemment ;
- R¹² représente un atome d'oxygène, un radical alkylène en C1-C12 linéaire ou ramifié, un radical arylène en C6-C12, ou un radical alcénylène en C2-C12 linéaire ou ramifié, lesdits radicaux alkylène et alcénylène comprenant éventuellement un ou plusieurs radicaux choisi(s) parmi -O-, -S-, -NR- avec R représentant H ou un groupe alkyle, -C(=O)-O- ou -O-C(=O), - C(O)-NR'- ou -NR'-C(=O) avec R' représentant H ou un groupe alkyle, -O-C(=O)-NH- ou - NH-C(=O)-O- ou uretdione;
- R¹³ représente un radical : 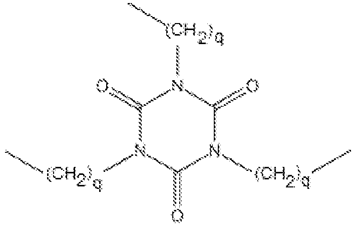 avec q représentant un nombre entier allant de 1 à 10.

Les composés de formule (V-B) sont de préférence ceux dans laquelle :
- q va de 1 à 3 ;
- R⁹, identiques ou différents, représente chacun un groupe -OR¹¹ avec R¹¹ représentant un groupe alkyle en C1-C4 linéaire ou ramifié.

De préférence, les composés de formule (V-B) sont choisis parmi les composés suivants :

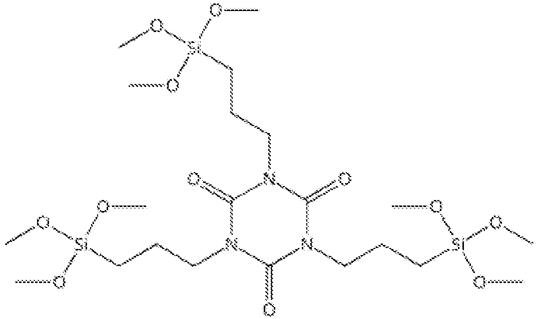

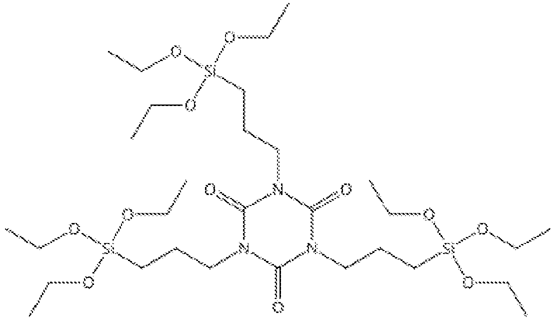

Les composés de formule (V-A) sont de préférence ceux dans laquelle :
- R¹² représente un atome d'oxygène, un radical alkylène en C1-C8 linéaire ou ramifié, ou un radical alcénylène en C2-C8 linéaire ou ramifié, lesdits radicaux alkylène et alcénylène comprenant éventuellement un ou plusieurs radicaux choisi(s) parmi -O-, -S-, -NR- avec R représentant H ou un groupe alkyle, -C(O)-NR'- ou -NR'-C(=O) avec R' représentant H ou un groupe alkyle, -O-C(=O)-NH- ou -NH-C(=O)-O- ou uretdione ;
- R¹⁰, identiques ou différents, représentent chacun un radical alkyle linéaire ou ramifié comprenant de 1 à 4 atomes de carbone ou un groupe -N=C(Rⁱ)R^{j} dans laquelle :
   - R est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - Rⁱ est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
   - ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène ;
- R⁹, identiques ou différents, représente chacun un groupe alkyle en C1-C6 linéaire ou ramifié, ou un groupe -OR¹¹ avec R¹¹ représentant un groupe alkyle en C1-C4 linéaire ou ramifié ; et
- t représente un entier égal à 0, 1 ou 2.

De façon encore plus préférée, les composés de formule (V-A) sont ceux dans laquelle :
- R¹² représente un atome d'oxygène, un radical alkylène en C1-C8 linéaire ou ramifié, ou un radical alcénylène en C2-C8 linéaire ou ramifié, lesdits radicaux alkylène et alcénylène comprenant éventuellement un ou plusieurs radicaux choisi(s) parmi -O-, -S-, -NR- avec R représentant H ou un groupe alkyle, -C(O)-NR'- ou -NR'-C(=O) avec R' représentant H ou un groupe alkyle, -O-C(=O)-NH- ou -NH-C(=O)-O- ou uretdione ;
- R¹⁰, identiques ou différents, représentent chacun un radical alkyle linéaire ou ramifié comprenant de 1 à 4 atomes de carbone
- R⁹, identiques ou différents, représente chacun un groupe alkyle en C1-C6 linéaire ou ramifié, ou un groupe -OR¹¹ avec R¹¹ représentant un groupe alkyle en C1-C4 linéaire ou ramifié ; et
- t représente un entier égal à 0, 1 ou 2.

De préférence, les composés de formule (V-A) sont choisis dans le groupe constitué de :

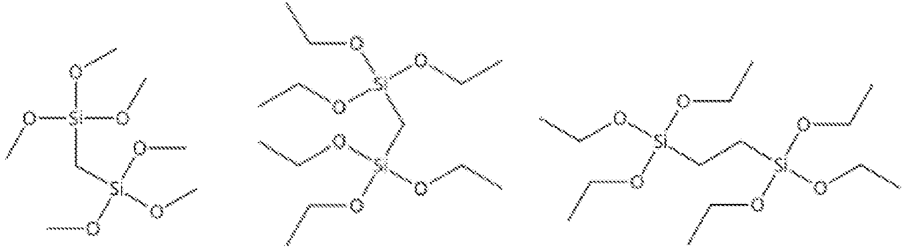

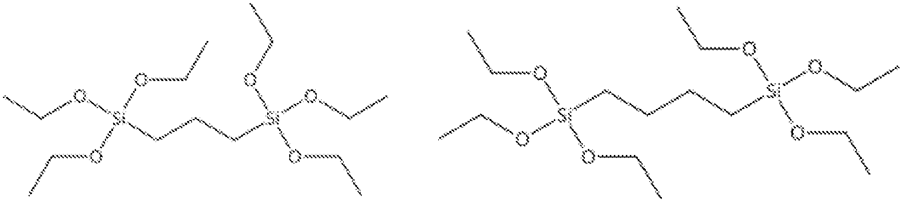

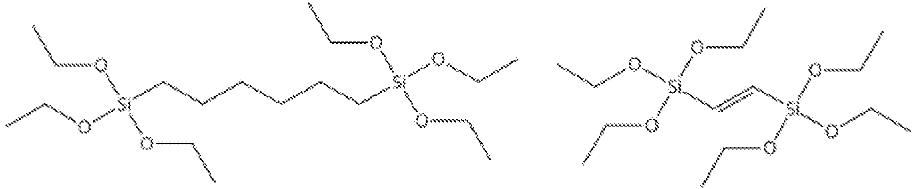

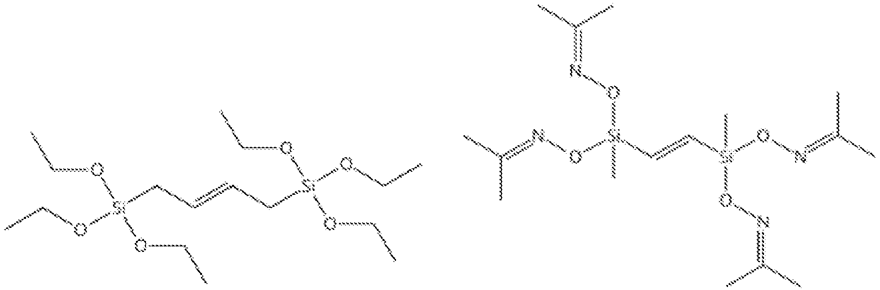

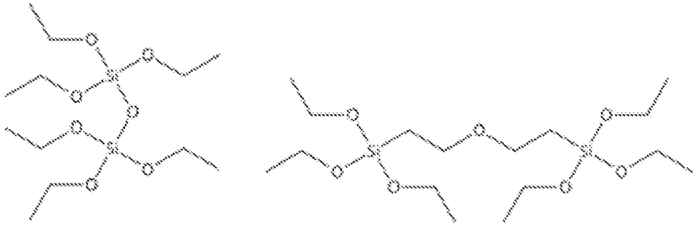

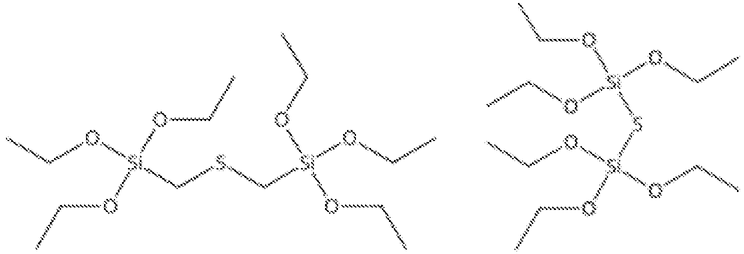

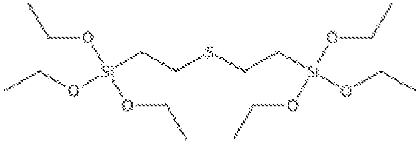

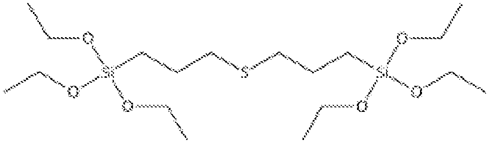

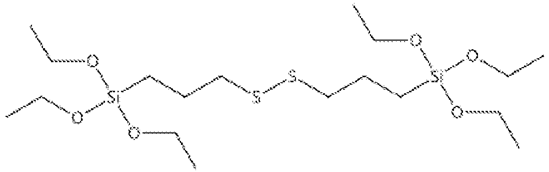

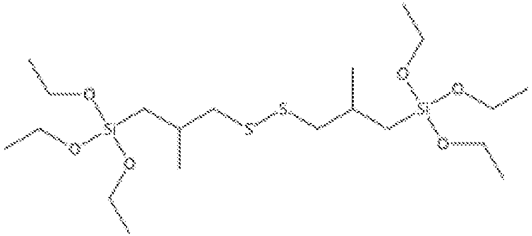

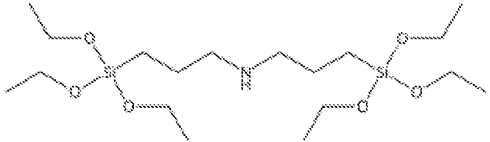

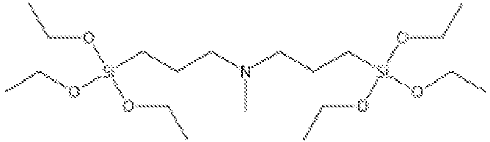

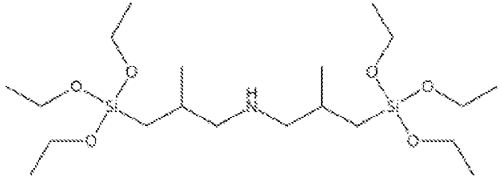

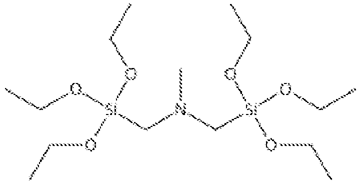

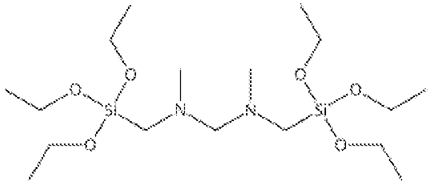

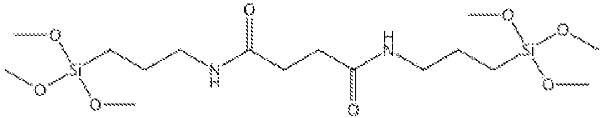

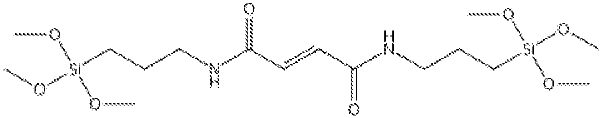

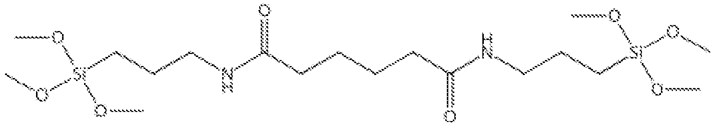

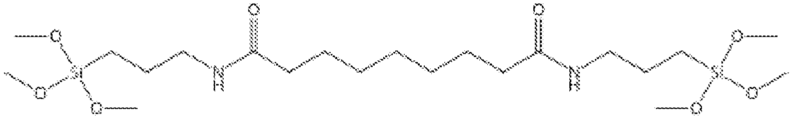

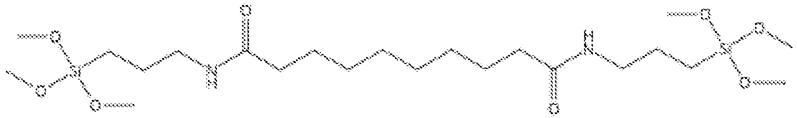

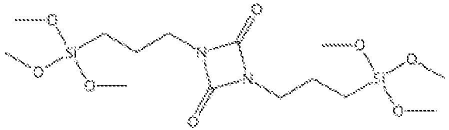

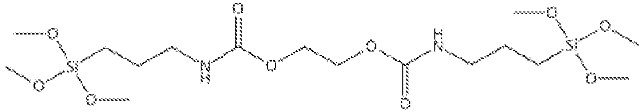

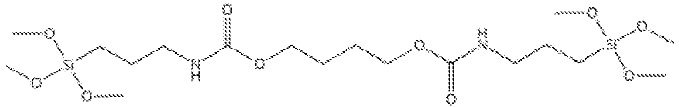

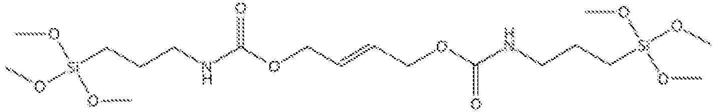

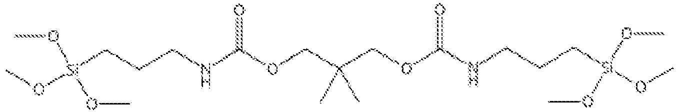

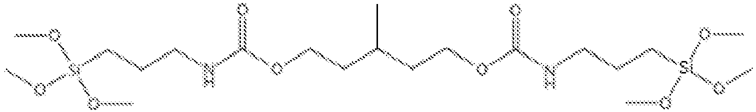

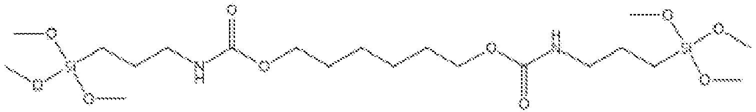

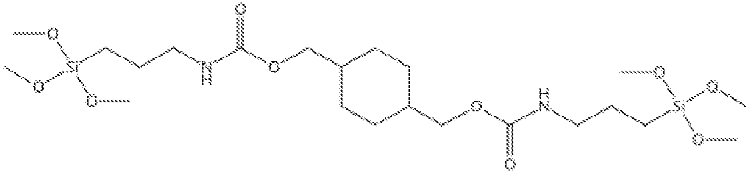

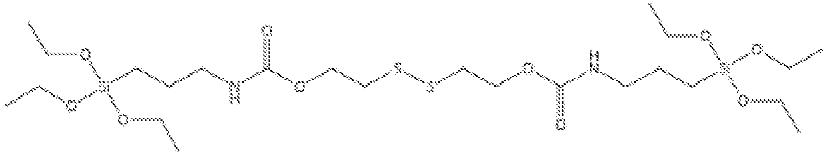

Le bis(alcoxysilane) ou tri(alcoxysilane) (C) est de préférence un composé de formule (V-A), et notamment le 1,2-bis(triéthoxysilyl)éthane.

La composition peut comprendre une teneur totale en bis(alcoxysilane)(s) ou tri(alcoxysilane)(s) (C) allant de 0,1% à 20% en poids, de préférence de 0,2% à 10% en poids, préférentiellement de 0,5% à 5% en poids, et encore plus avantageusement de 1% à 3% en poids par rapport au poids total de la composition.

### Catalyseur de réticulation (D)

Le catalyseur (D) peut être tout catalyseur connu par l'homme du métier pour la condensation de silanol. On peut citer comme exemples de tels catalyseurs :
- les aminosilanes comme le N-(2-aminoéthyl)-3-aminopropyltriméthoxysilane (commercialement disponible sous la dénomination SILQUEST^{®} A-1120 auprès de la société MOMENTIVE) ou le 3-aminopropyltriméthoxysilane,
- des dérivés organiques du titane comme l'acétyl acétonate de titane (disponible commercialement sous la dénomination TYZOR^{®} AA75 auprès de la société DU PONT DE NEMOURS),
- de l'aluminium comme le chélate d'aluminium (disponible commercialement sous la dénomination K-KAT^{®} 5218 auprès de la société KING INDUSTRIES),
- des amines comme le 1,8-diazabicyclo[5.4.0]undéc-7-ène (DBU) ou le 1,5-diazabicyclo[4.3.0]non-5-ène (DBN), l'éther diéthylique-2,2'-morpholine (DMDEE), le 1,4-diazabicylo[2.2.2]octane (DABCO),
- les catalyseurs à base d'étain comme par exemple le NEOSTANN^{®} S-1 ou TIBKAT^{®} 216 (disponible respectivement auprès de KANEKA ou TIB CHEMICALS). Ces catalyseurs à base d'étain conviennent particulièrement pour les polymères silylés de formule (II).

Le ou les catalyseurs (D) représentent de préférence de 0,01% à 1% en poids, préférentiellement de 0,05% à 0,6% en poids, avantageusement de 0,1% à 0,6% en poids du poids total de la composition.

### Composition

Selon un mode de réalisation préféré, la composition comprend :
- de 10% à 60% en poids de polymère(s) (A) comprenant au moins un groupement alcoxysilane ;
- de 25% à 70% en poids de charge(s) carbonatée(s) (B) ;
- de 0,01% à 5% en poids de bis(alcoxysilane)(s) ou tri(alcoxysilane)(s) (C) ayant une masse molaire allant de 250 à 1 000 g/mol ;
- de 0,01% à 1% en poids de catalyseur(s) de réticulation (D) ;
les pourcentage étant exprimés en poids par rapport au poids total de ladite composition.

Selon un mode de réalisation, la composition comprend en outre au moins un additif choisi dans le groupe constitué des solvants, des pigments, des promoteurs d'adhérence, des absorbeurs d'humidité, des stabilisants UV, des agents rhéologiques, des charges autres que les charges carbonatées, et leurs mélanges.

Dans le cadre de l'invention, on entend par « charge autre que la charge carbonatée » ou encore « charge », une charge qui n'est pas une charge carbonatée.
La charge peut être choisie parmi les charges organiques, les charges inorganiques et leurs mélanges.

A titre de charge(s) organique(s), on peut utiliser n'importe quelle(s) charge(s) organique(s) et notamment polymérique(s) typiquement utilisée(s) dans le domaine des compositions de mastic.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

De préférence, la charge est une charge inorganique.

Les charges inorganiques peuvent se présenter sous la forme de particules de géométrie diverse. Elles peuvent être par exemple sphériques, fibreuses, ou présenter une forme irrégulière.

Selon un mode de réalisation, la charge est choisie parmi le sable, les billes de verre, le verre, le quartz, la barite, l'alumine, le mica, le talc. De préférence, la charge est choisie parmi le sable et les billes de verre.

Le sable qui peut être utilisé dans la présente invention a de préférence une granulométrie allant de 0,1 à 400 µm, préférentiellement de 1 à 400 µm,de préférence encore de 10 à 350 µm, de préférence encore de 50 à 300 µm.

Les billes de verre qui peuvent être utilisées dans la présente invention ont de préférence une granulométrie allant de 0,1 à 400 µm, préférentiellement de 1 à 400 µm, de préférence encore de 10 à 350 µm, de préférence encore de 50 à 300 µm.

La composition selon l'invention peut comprendre au moins un agent de rhéologie.

A titre d'exemple d'agent(s) de rhéologie utilisable(s), on peut citer n'importe quel agent de rhéologie habituellement utilisé dans le domaine des compositions de mastic.

De préférence, on utilise un ou plusieurs agents de rhéologie choisis parmi les agents thixotropiques, et plus préférentiellement parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.
- les cires d'amides micronisées, tel que le CRAYVALLAC SLX commercialisé par Arkema.

La teneur totale en agent(s) de rhéologie(s) pouvant être utilisée peut varier de 1% à 30% en poids, de préférence de 5% à 30 % en poids, plus préférentiellement de 10% à 25% en poids par rapport au poids total de la composition selon l'invention.

Le solvant est de préférence un solvant volatil à température ambiante (température de l'ordre de 23°C). Le solvant volatil peut par exemple être choisi parmi les alcools volatils à température ambiante, tel que l'éthanol ou l'isopropanol. Le solvant volatil permet par exemple de diminuer la viscosité de la composition et de rendre la composition plus facile à appliquer. Le caractère volatil du solvant permet au joint, obtenu après durcissement de la composition, de ne plus contenir de solvant. Ainsi, le solvant n'a par exemple pas d'influence négative sur la dureté du joint.

Lorsqu'un solvant, en particulier un solvant volatil, est présent dans la composition, sa teneur est de préférence inférieure ou égale à 5% en poids, de préférence encore inférieure ou égale à 3% en poids, par rapport au poids total de la composition.

De préférence, la teneur en solvant(s) dans la composition est comprise entre 0% et 5% en poids.

Lorsqu'un pigment est présent dans la composition, sa teneur est de préférence inférieure ou égale à 3% en poids, de préférence encore inférieure ou égale à 2% en poids, par rapport au poids total de la composition. Lorsqu'il est présent, le pigment peut par exemple représenter de 0,1% à 3% en poids ou de 0,4% à 2% en poids du poids total de la composition.

Les pigments peuvent être des pigments organiques ou inorganiques.

Par exemple, le pigment est TiO₂, en particulier le KRONOS^{®} 2059 commercialisé par la société KRONOS.

L'absorbeur d'humidité, s'il est présent, peut être choisi parmi le vinyltriméthoxysilane (VTMO), le vinyltriéthoxysilane (VTEO), les alkoxyarylsilanes, tel que le GENIOSIL^{®} XL 70 disponible auprès de la Société WACKER.

Lorsqu'un absorbeur d'humidité est présent dans la composition, sa teneur est de préférence inférieure ou égale à 3% en poids, de préférence encore inférieure ou égale à 2% en poids par rapport au poids total de la composition. Lorsqu'il est présent, l'absorbeur d'humidité peut par exemple représenter de 0,5% à 3% en poids ou de 1% à 2% en poids par rapport au poids total de la composition.

Parmi les stabilisants UV, on peut citer les benzotriazoles, les benzophénones, les amines dites encombrées telles que le bis(2,2,6,6,-tétraméthyl-4-piperidyl)sébacéate, et leurs mélanges.

On peut par exemple citer les produits TINUVIN^{®} 328 ou TINUVIN^{™} 770 commercialisés par BASF.

La composition selon l'invention peut être sous forme mono-composante, c'est-à-dire que tous les composants sont conditionnés dans un même compartiment.

La composition est de préférence prête à l'emploi c'est-à-dire que l'utilisateur (particulier ou professionnel) peut appliquer directement la composition pour réaliser le joint, sans avoir à effectuer de mélange préalable.

La composition peut être préparée par mélange du ou des polymères (A) et de(s) charge(s) (carbonatée et autres charges) à une température allant de 5°C à 80°C, de préférence sous atmosphère inerte. Le ou les catalyseurs peuvent être ajoutés en même temps, ou dans une second étape après mélange du(des) polymère(s) et de(s) la charge(s). Le composé (C) peut également être ajouté en même temps, ou dans une seconde étape après mélange du(des) polymère(s) et de(s) la charge(s). Les autres additifs sont introduits dans la composition conformément aux usages habituels.

Les compositions selon l'invention comprennent un polymère (A) réticulable à l'humidité dont la structure chimique est dotée de groupes réactifs terminaux de type alkoxysilane, ainsi qu'un composé (C) comprenant des groupes réactifs. La réaction de l'ensemble de ces groupes réactifs avec l'eau provenant de l'humidité de l'air ou du substrat (dénommée réaction de réticulation) permet notamment, après l'introduction du mastic dans l'interstice entre les 2 substrats à assembler, la création d'un réseau polymérique tridimensionnel solide, qui confère au joint adhésif ainsi créé les propriétés mécaniques souhaitées.

Cette réaction, dite de réticulation, conduit après son achèvement à la formation d'un joint adhésif entre les 2 substrats qui est constitué par le polymère et le composé (C) réticulés en un réseau tridimensionnel formé par les chaînes polymériques reliées entre elles par des liaisons de type siloxane. Ce joint assure notamment la solidité de l'assemblage des 2 substrats ainsi obtenu.

La composition selon l'invention présente avantageusement une bonne résistance au vieillissement après réticulation. En particulier, la composition présente avantageusement une résistance élevée au cataplasme humide.

La résistance au vieillissement est notamment testée par le test de cataplasme humide selon les conditions de la norme NF EN ISO 9142 de janvier 2004, annexe E, procédure E2 (temps d'exposition dans la chambre A = 14 jours). Ce test permet notamment de vérifier la fiabilité d'assemblage dans des conditions climatiques contraignantes.

### Utilisations

La présente invention concerne l'utilisation de la composition telle que définie précédemment comme adhésif, mastic ou revêtement, de préférence comme mastic industriel.

La composition peut en particulier servir comme adhésif et mastic dans le domaine automobile, par exemple pour fixer les pare-brise de voiture, comme joint métallique.

La présente invention concerne également l'utilisation d'un composé (C) choisi parmi les bis(alcoxysilane) et les tri(alcoxysilane) ayant une masse molaire allant de 250 à 1 000 g/mol dans une composition comprenant:
- au moins un polymère (A) comprenant au moins un groupement alcoxysilane ;
- au moins 25% en poids d'une charge carbonatée (B) par rapport au poids total de ladite composition ;
pour améliorer la résistance au vieillissement de la composition après réticulation.

Les ingrédients et caractéristiques décrits ci-dessus pour la composition s'appliquent également pour l'utilisation susmentionnée.

Dans le cadre de l'invention, par « comprise entre x et y », ou « allant de x à y », on entend un intervalle dans lequel les bornes x et y sont incluses. Par exemple, la gamme «comprise entre 1% et 10% » inclus notamment les valeurs 1% et 10%.

Les exemples suivants illustrent l'invention sans toutefois la limiter.

### PARTIE EXPERIMENTALE

Les produits suivants ont été utilisés pour la fabrication des compositions de mastic selon l'invention :
- MS POLYMER^{®} S 303 (disponible auprès de KANEKA) (polymère polyéther silylé ayant une Mn de 21 000- 23 000 Dalton ;
- DYNASYLAN BTSE^{®} (CAS : 16068-37-4) disponible chez EVONIK : 1,2-bis(triéthosysilyl)éthane, densité 0,95 g/cm³ ;
- TINUVIN^{™} 770 : antioxydant de type bis(2,2,6,6-tétramethyl-4-pipéridinyl)sébacate, disponible auprès de la Société BASF ;
- DYNASYLAN^{®} VTMO : absorbeur d'humidité vinyltriméthoxysilane, disponible auprès de la Société EVONIK ;
- TiO2 commercialisé par Kronos ;
- CALOFORT S commercialisé par Speciality Minerals ;
- AMMO A 1110 commercialisé par Momentive ;
- TIBKAT 226 commercialisé par Tib Chemicals.

Les compositions C1 et C2 ont été préparées par mélange des ingrédients suivants selon le mode opératoire suivant : mélange des polymères, suivi de l'ajout des charges et des pigments, du VTMO, et enfin les autres ingrédients et le catalyseur. Le tout est mélangé à une température inférieure à 70°C

| | C1 (comparative) | C2 (invention) |
|---|---|---|
| MS^{®} S 303 | 43,50 | 42,50 |
| DYNASYLAN BTSE | - | 1.00 |
| TiO₂ | 5,8 | 5,8 |
| TINUVIN^{®} T770 | 0,88 | 0,88 |
| Calofort S | 45,12 | 45,12 |
| AMMO A 11-10 | 2,80 | 2,80 |
| VTMO | 1,40 | 1,40 |
| TIBKAT 226 | 0,50 | 0,50 |
| | | |
| | 100 | 100 |

Dans ce tableau 1, les proportions indiquées sont en parties en poids.

### Propriétés des compositions réticulées

Les propriétés obtenues des compositions C1 et C2 après réticulation sont résumées dans le tableau 2 suivant :

| | C1 (comparative) | C2 (invention) |
|---|---|---|
| Temps de formation de peau (en min) | 22 | 10 |
| Réticulation après 24h (mm) | 3,3 | 3 |
| Allongement à la rupture (en %) | 240 | 160 |
| force maximale à la rupture (en MPa) | 3 | 32 |
| Shear Al-Al (résistance au cisaillement) | 1,57 | 1,60 |
| Résistance au cisaillement (shear) Al-Al après test de cataplasme humide | 0,79 | 1,52 |
| % de perte de la résistance au cisaillement (shear) | 49,7 | 5 |

La mesure du temps de formation de peau (ou « skinning time » en anglais) a été réalisée en atmosphère contrôlée à une température de 20°C et une humidité relative d'environ 60%.

La composition a été appliquée à l'aide d'une spatule en bois et sous la forme d'un film mince d'épaisseur environ 0,5 mm, sur une lame de verre de longueur 76 mm et de largeur 26 mm. Sitôt après l'application dudit film, un chronomètre a été mis en route et il a été examiné toutes les minutes à l'aide d'un léger appui du doigt si le film est sec ou si un résidu de composition est transféré sur le doigt. Le temps de formation de peau est le temps au bout duquel le film de composition est sec et pour lequel il n'y a plus aucun transfert de résidu de colle sur le doigt. Le résultat est exprimé en minutes

La mesure de la résistance et de l'allongement à la rupture (ou « elongation at break » en anglais) par essai de traction a été effectuée selon le protocole décrit ci-après.

Le principe de la mesure consiste à étirer dans une machine de traction, dont la mâchoire mobile se déplace à une vitesse constante égale à 100 mm/minute, une éprouvette standard constituée de la composition réticulée et à enregistrer, au moment où se produit la rupture de l'éprouvette, la contrainte de traction appliquée (en MPa) ainsi que l'allongement de l'éprouvette (en %). L'éprouvette standard est en forme d'haltère, comme illustré dans la norme internationale ISO 37. La partie étroite de l'haltère utilisée a pour longueur 20 mm, pour largeur 4 mm et pour épaisseur 500 µm.

La réticulation après 24h (« cure 24h » en anglais ») consiste à solliciter en pelage à angle droit, un cordon plat du produit à examiner, de largeur constante et d'épaisseur croissante. Ce cordon a été obtenu par remplissage d'une gouttière calibrée, de largeur 10 mm et de profondeur variant linéairement de 0 à 10 mm. Le montage a été réalisé en PTFE. Après application pendant 24 h en enceinte climatisée a 23 °C et 50 % RH, on a relevé à l'aide de graduations le niveau auquel le produit, encore pâteux (non polymérisé sur l'épaisseur) est collé au montage.

Le module à 100% d'élongation a été mesuré selon le test figurant dans la norme ISO11600 de 2002, qui renvoi à la norme ISO8339 de 2005.

Un essai de vieillissement, habituellement appelé cataplasme humide, est un essai de vieillissement très contraignant pour un adhésif, il est très prisé notamment par l'industrie automobile car il garantit une fiabilité de l'assemblage dans des conditions climatiques contraignantes. Le test de cataplasme humide a été réalisée selon la norme NF EN ISO 9142 de janvier 2004, annexe E, procédure E2 (temps d'exposition dans la chambre A = 14 jours).

En outre, la composition C2 conduit avantageusement à un joint adhésif présentant après réticulation de bonnes performances mécaniques dont un allongement à la rupture supérieure ou égale à 150 %.

Le test du cataplasme humide montre que la composition C2 n'a pas perdu plus de 5% de ses propriétés initiales, démontrant avantageusement une bonne tenue de la composition au vieillissement dans des conditions contraignantes de température et d'humidité.

## Revendications

1. Composition réticulable à l'humidité comprenant :
- au moins un polymère (A) comprenant au moins un groupement alcoxysilane ;
- au moins 25% en poids d'au moins une charge carbonatée (B) par rapport au poids total de ladite composition ;
- au moins un composé choisi parmi les bis(alcoxysilane) ou tri(alcoxysilane) (C) ayant une masse molaire allant de 250 à 1 000 g/mol;
- au moins un catalyseur de réticulation (D) ;
ladite composition étant **caractérisée en ce qu'**elle comprend une teneur en plastifiant inférieure ou égale à 1% en poids par rapport au poids total de la composition.

2. Composition selon la revendication 1, dans laquelle le polymère (A) comportant au moins un groupement alkoxysilane est un polymère comprenant au moins un, de préférence au moins deux groupements de formule (I) :
-Si(R⁴)ₚ(OR⁵)₃₋ₚ (I)
dans laquelle :
- R⁴ représente un radical alkyl linéaire ou ramifié comprenant de 1 à 4 atomes de carbone ou un groupe alkoxy comprenant de 1 à 4 atomes de carbone;
- R⁵ représente un radical alkyl linéaire ou ramifié comprenant de 1 à 4 atomes de carbone ou un groupe -N=C(Rⁱ)R^{j} dans laquelle :
- Rⁱ est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- R^{j} est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène ;
- p est un nombre entier égal à 0, 1 ou 2.

3. Composition selon l'une quelconque des revendications 1 ou 2, dans laquelle le polymère silylé (A) comportant au moins un groupement alkoxysilane est choisi parmi les polymères de formules (II), (III) ou (IV) telles que définies ci-dessous, et leurs mélanges :
(R⁵O)₃₋ₚ(R⁴)ₚSi-R⁰-[OR²]ₙ-R⁰-Si(R⁴)p(OR⁵)₃₋ₚ (II) 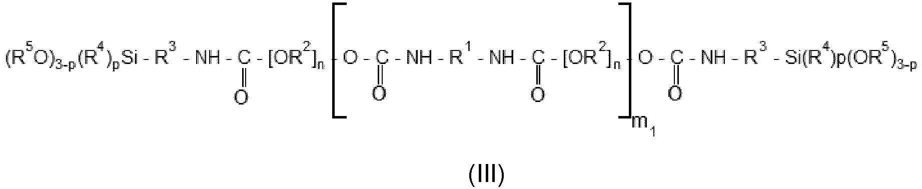 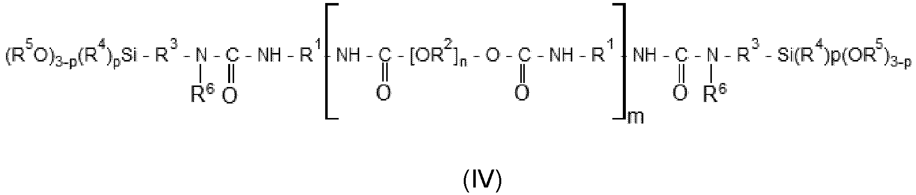
dans lesquelles :
- R¹ représente un radical divalent hydrocarboné comprenant de 5 à 15 atomes de carbone qui peut être aromatique ou aliphatique, linéaire, ramifié ou cyclique,
- R⁰ représente un radical divalent alkylène linéaire ou ramifié comprenant de 3 à 6 atomes de carbone,
- R³ représente un radical divalent alkylène linéaire ou ramifié comprenant de 1 à 6 atomes de carbone, de préférence R³ représentant méthylène ou n-propylène,
- R² représente un radical divalent alkylène linéaire ou ramifié comprenant de 2 à 14 atomes de carbone, de préférence de 2 à 6 atomes de carbone, et encore plus préférentiellement de 2 à 4 atomes de carbone,
- R⁴ représente un radical alkyl linéaire ou ramifié comprenant de 1 à 4 atomes de carbone ou un groupe alkoxy comprenant de 1 à 4 atomes de carbone;
- R⁵ représente un radical alkyl linéaire ou ramifié comprenant de 1 à 4 atomes de carbone ou un groupe -N=C(Rⁱ)R^{j} dans laquelle :
- Rⁱ est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- R^{j} est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène ;
- R⁶ représente un atome d'hydrogène, un radical phényle, un radical alkyle linéaire, ramifié ou cyclique comprenant de 1 à 6 atomes de carbone, ou un radical 2-succinate de formule : 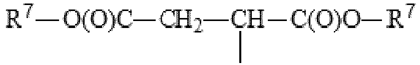 dans laquelle R⁷ est un radical alkyle linéaire ou ramifié comprenant de 1 à 6 atomes de carbone,
- n est un nombre entier tel que la masse moléculaire moyenne en nombre du bloc polyéther de formule -[OR²]ₙ- va de 300 g/mol à 40 000 g/mol dans les polymères de formules (II), (III) et (IV),
- m₁ est zéro ou un nombre entier,
- n et m₁ sont tels que la masse moléculaire moyenne en nombre du polymère de formule (III) va de 500 g/mol à 50 000 g/mol, de préférence de 700 g/mol à 20 000 g/mol,
- m est un nombre entier différent de zéro,
- n et m sont tels que la masse moléculaire moyenne en nombre du polymère de formule (IV) va de 500 g/mol à 50 000 g/mol, de préférence de 700 g/mol à 20 000 g/mol,
- p est un nombre entier égal à 0, 1 ou 2, p étant de préférence 0 ou 1.

4. Composition selon l'une quelconque des revendications 1 à 3, dans laquelle le polymère (A) est choisi parmi les polymères de formule (II) :
(R⁵O)₃₋ₚ(R⁴)ₚSi-R⁰-[OR²]ₙ-R⁰-Si(R)p(OR⁵)₃₋ₚ (II)
dans laquelle :
- R° représente un radical divalent alkylène linéaire ou ramifié comprenant de 3 à 6 atomes de carbone,
- R² représente un radical divalent alkylène linéaire ou ramifié comprenant de 2 à 14 atomes de carbone, de préférence de 2 à 6 atomes de carbone, et encore plus préférentiellement de 2 à 4 atomes de carbone,
- R⁴ représente un radical alkyl linéaire ou ramifié comprenant de 1 à 4 atomes de carbone ou un groupe alkoxy comprenant de 1 à 4 atomes de carbone;
- R⁵ représente un radical alkyl linéaire ou ramifié comprenant de 1 à 4 atomes de carbone ou un groupe -N=C(Rⁱ)R^{j} dans laquelle :
- Rⁱ est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- R^{j} est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène ;
- p est un nombre entier égal à 0, 1 ou 2, p étant de préférence 0 ou 1.

5. Composition selon l'une quelconque des revendications 1 à 4, **caractérisée en ce qu'**elle comprend de 3% à 80% en poids, de préférence de 10% à 60% en poids, préférentiellement de 20% à 60% en poids, avantageusement de 30% à 60% en poids de polymère(s) silylé(s) (A) par rapport au poids total de ladite composition.

6. Composition selon l'une quelconque des revendications 1 à 5, **caractérisée en ce que** le bis(alcoxysilane) ou tri(alcoxysilane) (C) a la formule (V) suivante :
R⁸-[SiR⁹ₜ(OR¹⁰)₃₋ₜ]ₛ (V)
dans laquelle:
- t représente est un nombre entier égal à 0, 1 ou 2 ;
- s représente un entier égal à 2 ou 3 ;
- R⁸ représente un radical organique ;
- R⁹, identiques ou différents, représente chacun un groupe alkyle en C1-C6 linéaire ou ramifié, ou un groupe -OR¹¹ avec R¹¹ représentant un groupe alkyle en C1-C4 linéaire ou ramifié ;
- R¹⁰, identiques ou différents, représentent chacun un radical alkyle linéaire ou ramifié comprenant de 1 à 4 atomes de carbone ou un groupe -N=C(Rⁱ)R^{j} dans laquelle :
- Rⁱ est un radical choisi parmi un atome d'hydrogène, un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical -CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- R^{j} est un radical choisi parmi un radical alkyle linéaire ou ramifié comprenant de 1 à 10 atomes de carbone, un radical alkényle linéaire ou ramifié comprenant de 2 à 10 atomes de carbone, un radical alkyle cyclique comprenant de 3 à 10 atomes de carbone, un radical aryle comprenant de 6 à 12 atomes de carbone, ou un radical - CH₂-N(G¹G²) où G¹ et G² représentent, indépendamment l'un de l'autre, un radical alkyle linéaire ou ramifié comprenant de 1 à 10 atomes de carbone, ou radical alkényle linéaire ou ramifié comprenant de 2 à 10 atomes de carbone ou un radical benzyle ;
- ou Rⁱ et R^{j} forment ensemble un cycle aliphatique comprenant de 3 à 14 atomes de carbone, de préférence de 4 à 8 atomes de carbone, ledit cycle aliphatique étant éventuellement substitué par au moins un groupe alkyle comprenant de 1 à 4 atomes de carbone, et ledit cycle comprenant éventuellement un ou plusieurs hétéroatomes choisis parmi un atome d'oxygène, un atome de soufre ou un atome d'azote, ledit atome d'azote n'étant alors pas lié à un atome d'hydrogène.

7. Composition selon l'une quelconque des revendications 1 à 6, **caractérisée en ce que** le bis(alcoxysilane) ou tri(alcoxysilane) (C) a une masse molaire allant de 270 à 1 000 g/mol, préférentiellement de 270 à 750 g/mol, encore plus préférentiellement de 270 à 600 g/mol.

8. Composition selon l'une quelconque des revendications 1 à 7, **caractérisée en ce que** le bis(alcoxysilane) ou tri(alcoxysilane) (C) a l'une des formules (V-A) ou (V-B) suivantes :
(R¹⁰O)₃₋ₜR⁹ₜSi-R¹²-SiR⁹ₜ(OR¹⁰)₃₋ₜ (V-A)
R¹³-(SiR⁹ₜ(OR¹⁰)₃₋ₜ]₃ (V-B)
dans lesquelles :
- R⁹, R¹⁰, et t sont tels que définis dans la revendication 6;
- R¹² représente un atome d'oxygène, un radical alkylène en C1-C12 linéaire ou ramifié, un radical arylène en C6-C12, ou un radical alcénylène en C2-C12 linéaire ou ramifié, lesdits radicaux alkylène et alcénylène comprenant éventuellement un ou plusieurs radicaux choisi(s) parmi -O-, -S-, -NR- avec R représentant H ou un groupe alkyle, -C(=O)-O- ou -O-C(=O), - C(O)-NR'- ou -NR'-C(=O) avec R' représentant H ou un groupe alkyle, -O-C(=O)-NH- ou - NH-C(=O)-O- ou uretdione;
- R¹³ représente un radical : 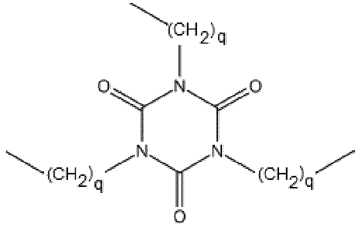 avec q représentant un nombre entier allant de 1 à 10.

9. Composition selon la revendication 8, **caractérisée en ce que** les composés de formule (V-B) sont choisis parmi les composés suivants :

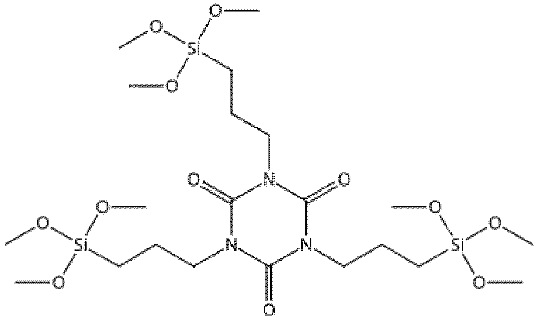

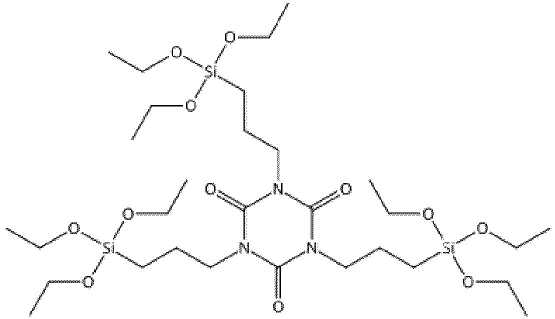

10. Composition selon la revendication 8, **caractérisée en ce que** les composés de formule (V-A) sont choisis parmi les composés suivants :

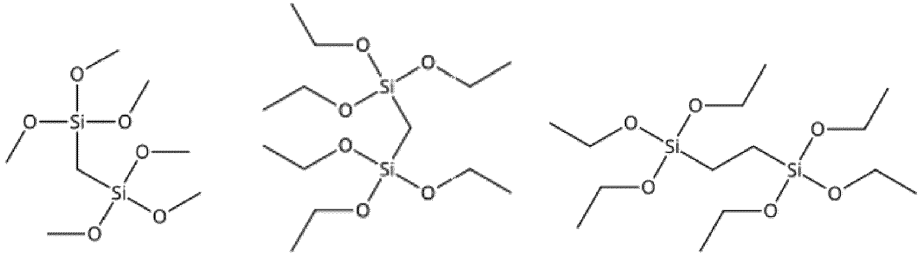

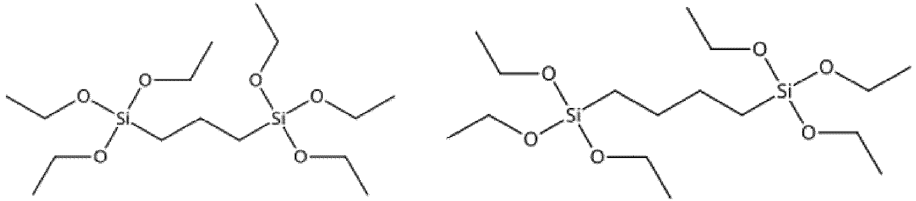

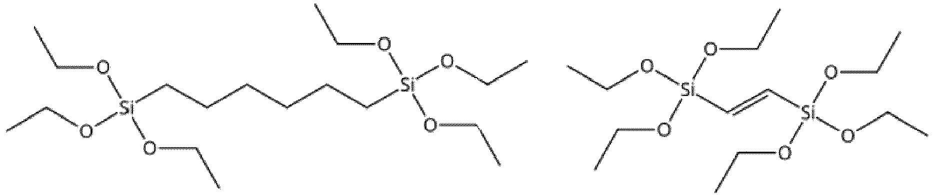

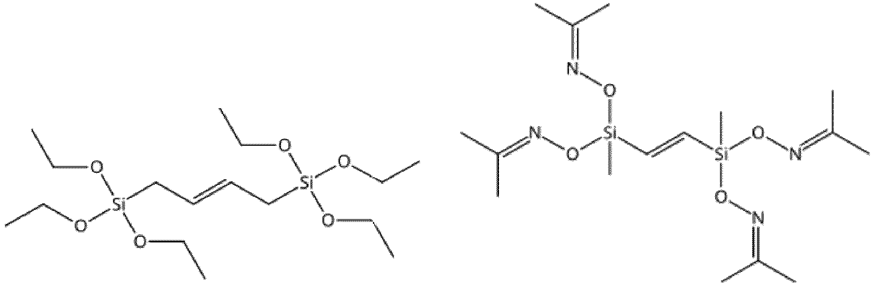

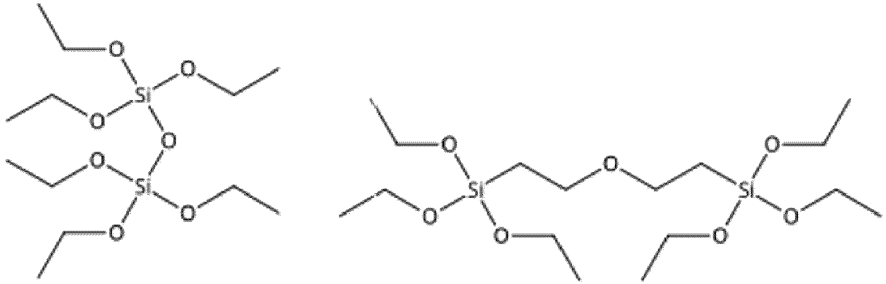

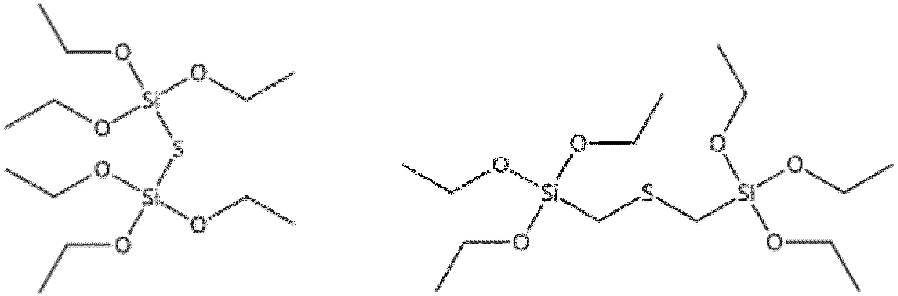

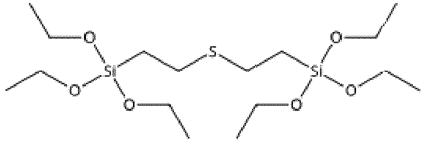

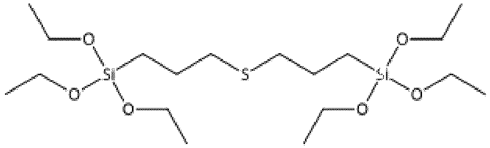

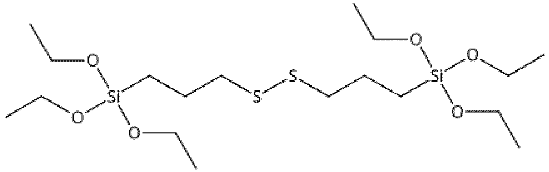

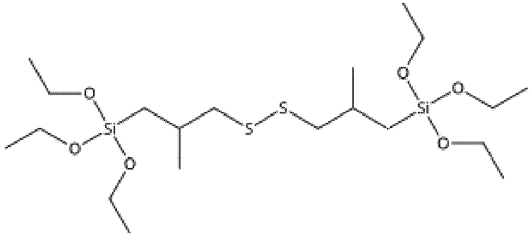

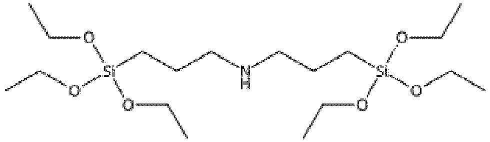

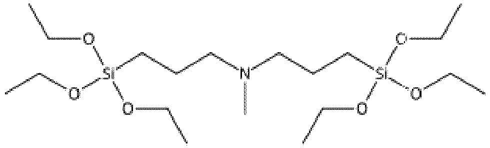

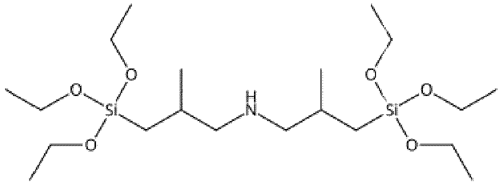

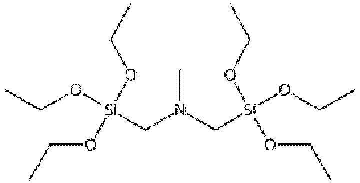

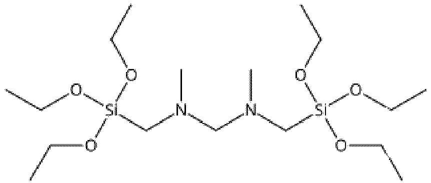

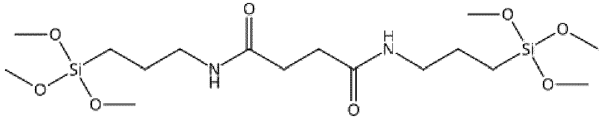

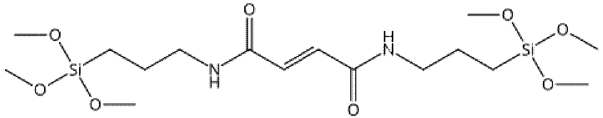

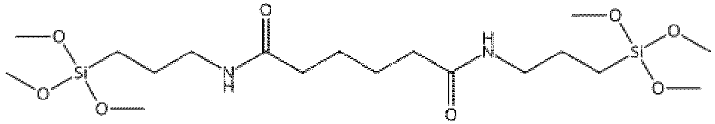

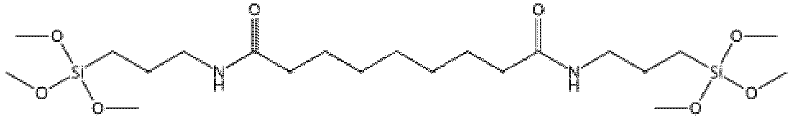

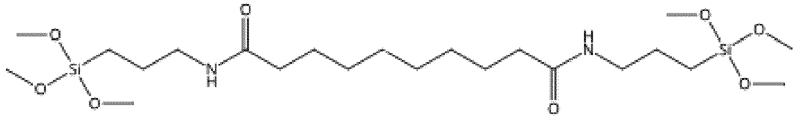

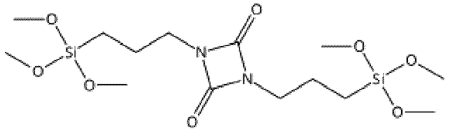

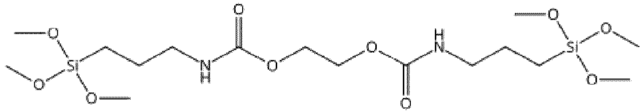

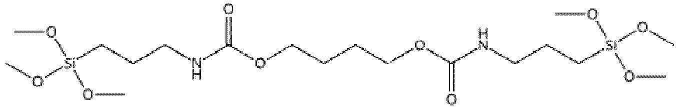

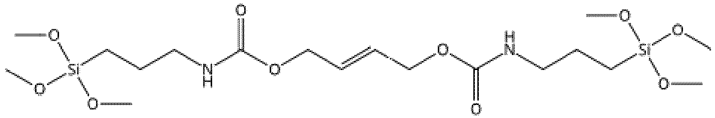

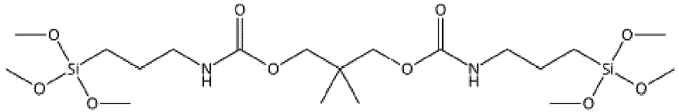

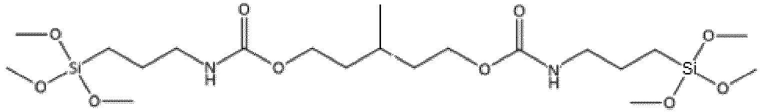

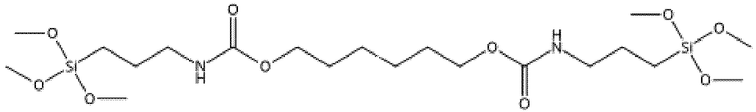

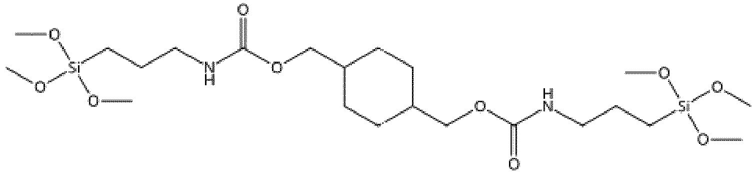

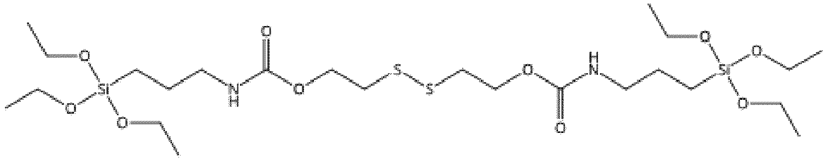

11. Composition selon l'une quelconque des revendications 1 à 10, **caractérisée en ce qu'**elle comprend une teneur totale en bis(alcoxysilane)(s) ou tri(alcoxysilane)(s) (C) allant de 0,1% à 20% en poids, de préférence de 0,2% à 10% en poids, préférentiellement de 0,5% à 5% en poids, et encore plus avantageusement de 1% à 3% en poids par rapport au poids total de la composition.

12. Composition selon l'une quelconque des revendications 1 à 11, **caractérisée en ce que** la charge carbonatée est choisie parmi les carbonates de métaux alcalin ou alcalino-terreux et leurs mélanges, de préférence la charge carbonatée est le carbonate de calcium.

13. Composition selon l'une quelconque des revendications 1 à 12, **caractérisée en ce qu'**elle comprend :
- de 10% à 60% en poids de polymère(s) (A) comprenant au moins un groupement alcoxysilane ;
- de 25% à 70% en poids de charge(s) carbonatée(s) (B) ;
- de 0,01% à 5% en poids de bis(alcoxysilane)(s) ou tri(alcoxysilane)(s) (C) ayant une masse molaire allant de 250 à 1 000 g/mol ;
- de 0,01% à 1% en poids de catalyseur(s) de réticulation (D) ;
les pourcentage étant exprimés en poids par rapport au poids total de ladite composition.

14. Utilisation de la composition selon l'une quelconque des revendications 1 à 13, comme adhésif, mastic ou revêtement.

15. Utilisation d'un composé (C) choisi parmi les bis(alcoxysilane) et les tri(alcoxysilane) ayant une masse molaire allant de 250 à 1 000 g/mol dans une composition comprenant:
- au moins un polymère (A) comprenant au moins un groupement alcoxysilane ;
- au moins 25% en poids d'une charge carbonatée (B) par rapport au poids total de ladite composition ;
pour améliorer la résistance au vieillissement de la composition après réticulation.

## Patentansprüche

1. Feuchtigkeitsvernetzbare Zusammensetzung, umfassend:
- mindestens ein Polymer (A), das mindestens eine Alkoxysilangruppe umfasst;
- mindestens 25 Gew.-% mindestens eines carbonathaltigen Füllstoffs (B) bezogen auf das Gesamtgewicht der Zusammensetzung;
- mindestens eine Verbindung ausgewählt aus Bis(alkoxysilan) oder Tri(alkoxysilan) (C) mit einer molaren Masse von 250 bis 1 000 g/mol;
- mindestens einen Vernetzungskatalysator (D);
wobei die Zusammensetzung **dadurch gekennzeichnet ist, dass** sie einen Weichmachergehalt kleiner oder gleich 1 Gew.-% bezogen auf das Gesamtgewicht der Zusammensetzung umfasst.

2. Zusammensetzung nach Anspruch 1, wobei das Polymer (A), das mindestens eine Alkoxysilangruppe umfasst, ein Polymer ist, das mindestens eine, bevorzugt mindestens zwei, Gruppen der Formel (I) umfasst:
-Si(R⁴)ₚ(OR⁵)₃₋ₚ (I)
in der:
- R⁴ für einen geradkettigen oder verzweigten Alkylrest mit 1 bis 4 Kohlenstoffatomen oder eine Alkoxygruppe mit 1 bis 4 Kohlenstoffatomen steht;
- R⁵ für einen geradkettigen oder verzweigten Alkylrest mit 1 bis 4 Kohlenstoffatomen oder eine Gruppe -N=C(Rⁱ)R^{j} steht, in der
- Rⁱ ein Rest ausgewählt aus einem Wasserstoffatom, einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- R^{j} ein Rest ausgewählt aus einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- oder Rⁱ und R^{j} zusammen einen aliphatischen Ring mit 3 bis 14 Kohlenstoffatomen, bevorzugt 4 bis 8 Kohlenstoffatomen, bilden, wobei der aliphatische Ring gegebenenfalls durch mindestens eine Alkylgruppe mit 1 bis 4 Kohlenstoffatomen substituiert ist und wobei der Ring gegebenenfalls ein oder mehrere Heteroatome ausgewählt aus einem Sauerstoffatom, einem Schwefelatom oder einem Stickstoffatom umfasst, wobei das Stickstoffatom dann nicht an ein Wasserstoffatom gebunden ist;
- p eine ganze Zahl gleich 0, 1 oder 2 ist.

3. Zusammensetzung nach einem der Ansprüche 1 oder 2, wobei das silylierte Polymer (A), das mindestens eine Alkoxysilangruppe umfasst, aus den Polymeren mit den Formeln (II), (III) oder (IV), wie nachstehend definiert, und ihren Mischungen ausgewählt ist:
(R⁵O)₃₋ₚ(R⁴)ₚSi-R⁰-[OR²]ₙ-R⁰-Si(R⁴)ₚ(OR⁵)₃₋ₚ (II) 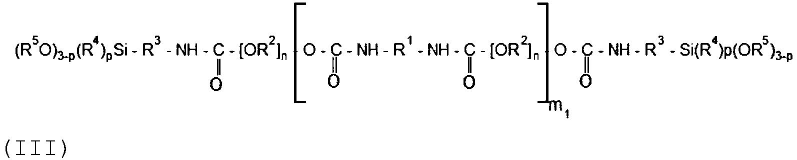 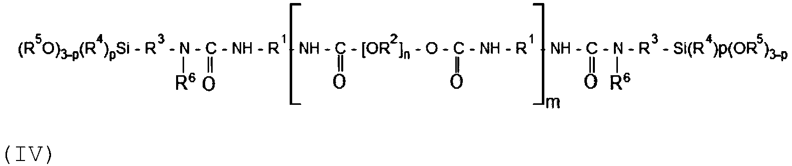
in denen:
- R¹ für einen zweiwertigen Kohlenwasserstoffrest mit 5 bis 15 Kohlenstoffatomen steht, der aromatisch oder aliphatisch, geradkettig, verzweigt oder cyclisch sein kann,
- R⁰ für einen geradkettigen oder verzweigten zweiwertigen Alkylenrest mit 3 bis 6 Kohlenstoffatomen steht;
- R³ für einen geradkettigen oder verzweigten zweiwertigen Alkylenrest mit 1 bis 6 Kohlenstoffatomen steht, wobei R³ bevorzugt für Methylen oder n-Propylen steht,
- R² für einen geradkettigen oder verzweigten zweiwertigen Alkylenrest mit 2 bis 14 Kohlenstoffatomen, bevorzugt 2 bis 6 Kohlenstoffatomen und noch bevorzugter 2 bis 4 Kohlenstoffatomen steht,
- R⁴ für einen geradkettigen oder verzweigten Alkylrest mit 1 bis 4 Kohlenstoffatomen oder eine Alkoxygruppe mit 1 bis 4 Kohlenstoffatomen steht;
- R⁵ für einen geradkettigen oder verzweigten Alkylrest mit 1 bis 4 Kohlenstoffatomen oder eine Gruppe -N=C(Rⁱ)R^{j} steht, in der
- Rⁱ ein Rest ausgewählt aus einem Wasserstoffatom, einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- R^{j} ein Rest ausgewählt aus einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- oder Rⁱ und R^{j} zusammen einen aliphatischen Ring mit 3 bis 14 Kohlenstoffatomen, bevorzugt 4 bis 8 Kohlenstoffatomen, bilden, wobei der aliphatische Ring gegebenenfalls durch mindestens eine Alkylgruppe mit 1 bis 4 Kohlenstoffatomen substituiert ist und wobei der Ring gegebenenfalls ein oder mehrere Heteroatome ausgewählt aus einem Sauerstoffatom, einem Schwefelatom oder einem Stickstoffatom umfasst, wobei das Stickstoffatom dann nicht an ein Wasserstoffatom gebunden ist;
- R⁶ für ein Wasserstoffatom, einen Phenylrest, einen geradkettigen, verzweigten oder cyclischen Alkylrest mit 1 bis 6 Kohlenstoffatomen oder einen 2-Succinat-Rest mit der folgenden Formel steht: 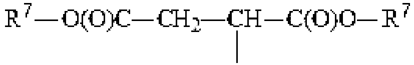 in der R⁷ ein geradkettiger oder verzweigter Alkylrest mit 1 bis 6 Kohlenstoffatomen ist;
- n eine derartige ganze Zahl ist, dass die zahlenmittlere Molekülmasse des Polyetherblocks mit der Formel -[OR²]ₙ- 300 g/mol bis 40 000 g/mol in den Polymeren mit den Formeln (II), (III) und (IV) beträgt,
- m₁ null oder eine ganze Zahl ist,
- n und m₁ derart sind, dass die zahlenmittlere Molmasse des Polymers mit der Formel (III) 500 g/mol bis 50 000 g/mol, bevorzugt 700 g/mol bis 20 000 g/mol beträgt;
- m eine von null verschiedene ganze Zahl ist,
- n und m derart sind, dass die zahlenmittlere Molekülmasse des Polymers mit der Formel (IV) 500 g/mol bis 50 000 g/mol, bevorzugt 700 g/mol bis 20 000 g/mol beträgt,
- p eine ganze Zahl gleich 0, 1 oder 2 ist, wobei p bevorzugt 0 oder 1 ist.

4. Zusammensetzung nach einem der Ansprüche 1 bis 3, wobei das Polymer (A) aus den Polymeren mit der Formel (II) ausgewählt ist:
(R⁵O)₃₋ₚ(R⁴)ₚSi-R⁰-[OR²]ₙ-R⁰-Si(R⁴)p(OR⁵)₃₋ₚ (II)
in der:
- R⁰ für einen geradkettigen oder verzweigten zweiwertigen Alkylenrest mit 3 bis 6 Kohlenstoffatomen steht;
- R² für einen geradkettigen oder verzweigten zweiwertigen Alkylenrest mit 2 bis 14 Kohlenstoffatomen, bevorzugt 2 bis 6 Kohlenstoffatomen und noch bevorzugter 2 bis 4 Kohlenstoffatomen steht,
- R⁴ für einen geradkettigen oder verzweigten Alkylrest mit 1 bis 4 Kohlenstoffatomen oder eine Alkoxygruppe mit 1 bis 4 Kohlenstoffatomen steht;
- R⁵ für einen geradkettigen oder verzweigten Alkylrest mit 1 bis 4 Kohlenstoffatomen oder eine Gruppe -N=C(Rⁱ)R^{j} steht, in der
- Rⁱ ein Rest ausgewählt aus einem Wasserstoffatom, einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- R^{j} ein Rest ausgewählt aus einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- oder Rⁱ und R^{j} zusammen einen aliphatischen Ring mit 3 bis 14 Kohlenstoffatomen, bevorzugt 4 bis 8 Kohlenstoffatomen, bilden, wobei der aliphatische Ring gegebenenfalls durch mindestens eine Alkylgruppe mit 1 bis 4 Kohlenstoffatomen substituiert ist und wobei der Ring gegebenenfalls ein oder mehrere Heteroatome ausgewählt aus einem Sauerstoffatom, einem Schwefelatom oder einem Stickstoffatom umfasst, wobei das Stickstoffatom dann nicht an ein Wasserstoffatom gebunden ist;
- p eine ganze Zahl gleich 0, 1 oder 2 ist, wobei p bevorzugt 0 oder 1 ist.

5. Zusammensetzung nach einem der Ansprüche 1 bis 4, **dadurch gekennzeichnet, dass** sie 3 bis 80 Gew.-%, bevorzugt 10 bis 60 Gew.-%, vorzugsweise 20 bis 60 Gew.-%, vorteilhafterweise 30 bis 60 Gew.-% silylierte(s) Polymer (e) (A) bezogen auf das Gesamtgewicht der Zusammensetzung umfasst.

6. Zusammensetzung nach einem der Ansprüche 1 bis 5, **dadurch gekennzeichnet, dass** das Bis(alkoxysilan) oder Tri(alkoxysilan) (C) die folgende Formel (V) hat:
R⁸-[SiR⁹ₜ(OR¹⁰)₃₋ₜ]ₛ (V)
in der:
- t für eine ganze Zahl gleich 0, 1 oder 2 steht;
- s für eine ganze Zahl gleich 2 oder 3 steht;
- R⁸ für einen organischen Rest steht;
- R⁹, die identisch oder unterschiedlich sind, jeweils für eine geradkettige oder verzweigte C1-C6-Alkylgruppe oder eine Gruppe -OR¹¹ stehen, wobei R¹¹ für eine geradkettige oder verzweigte C1-C4-Alkylgruppe steht;
- R¹⁰, die identisch oder unterschiedlich sind, jeweils für einen geradkettigen oder verzweigten Alkylrest mit 1 bis 4 Kohlenstoffatomen oder eine Gruppe -N=C(Rⁱ)R^{j} stehen, in der
- Rⁱ ein Rest ausgewählt aus einem Wasserstoffatom, einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- R^{j} ein Rest ausgewählt aus einem geradkettigen oder verzweigten Alkylrest mit 1 bis 10 Kohlenstoffatomen, einem geradkettigen oder verzweigten Alkenylrest mit 2 bis 10 Kohlenstoffatomen, einem cyclischen Alkylrest mit 3 bis 10 Kohlenstoffatomen, einem Arylrest mit 6 bis 12 Kohlenstoffatomen oder einem Rest -CH₂-N(G¹G²) ist, worin G¹ und G² unabhängig voneinander für einen geradkettigen oder verzweigten Alkylrest mit 1 bis 10 Kohlenstoffatomen oder einen geradkettigen oder verzweigten Alkenylrest mit 2 bis 10 Kohlenstoffatomen oder einen Benzylrest stehen;
- oder Rⁱ und R^{j} zusammen einen aliphatischen Ring mit 3 bis 14 Kohlenstoffatomen, bevorzugt 4 bis 8 Kohlenstoffatomen, bilden, wobei der aliphatische Ring gegebenenfalls durch mindestens eine Alkylgruppe mit 1 bis 4 Kohlenstoffatomen substituiert ist und wobei der Ring gegebenenfalls ein oder mehrere Heteroatome ausgewählt aus einem Sauerstoffatom, einem Schwefelatom oder einem Stickstoffatom umfasst, wobei das Stickstoffatom dann nicht an ein Wasserstoffatom gebunden ist.

7. Zusammensetzung nach einem der Ansprüche 1 bis 6, **dadurch gekennzeichnet, dass** das Bis(alkoxysilan) oder Tri(alkoxysilan) (C) eine molare Masse von 270 bis 1 000 g/mol, bevorzugt von 270 bis 750 g/mol und noch stärker bevorzugt von 270 bis 600 g/mol aufweist.

8. Zusammensetzung nach einem der Ansprüche 1 bis 7, **dadurch gekennzeichnet, dass** das Bis(alkoxysilan) oder Tri(alkoxysilan) (C) eine der folgenden Formeln (V-A) und (V-B) hat:
(R¹⁰O)₃₋ₜR⁹ₜSi-R¹²-SiR⁹ₜ(OR¹⁰)₃₋ₜ (V-A)
R¹³-[SiR⁹ₜ(OR¹⁰)₃₋ₜ]₃ (V-B)
in denen:
- R⁹, R¹⁰ und t wie in Anspruch 6 definiert sind;
- R¹² für ein Sauerstoffatom, einen geradkettigen oder verzweigten C1-C12-Alkylenrest, einen C6-C12-Arylenrest oder einen geradkettigen oder verzweigten C2-C12-Alkenylenrest stehen, wobei die Alkylen- und Alkenylenreste gegebenenfalls einen oder mehrere Rest ausgewählt aus -O-, -S-, -NR-, wobei R für H oder eine Alkylgruppe steht, -C(=O)-O- oder -O-C(=O), -C(O)-NR'-oder -NR'-C(=O), wobei R' für H oder eine Alkylgruppe steht, -O-C(=O)-NH- oder -NH-C(=O)-O- oder Uretdion umfassen;
- R¹³ für einen Rest wie folgt steht: 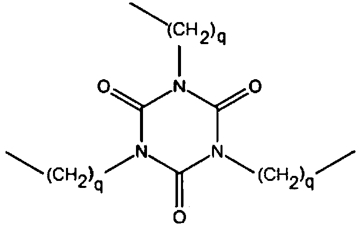 wobei q für eine ganze Zahl von 1 bis 10 steht.

9. Zusammensetzung nach Anspruch 8, **dadurch gekennzeichnet, dass** die Verbindungen mit der Formel (V-B) aus den folgenden Verbindungen ausgewählt sind:

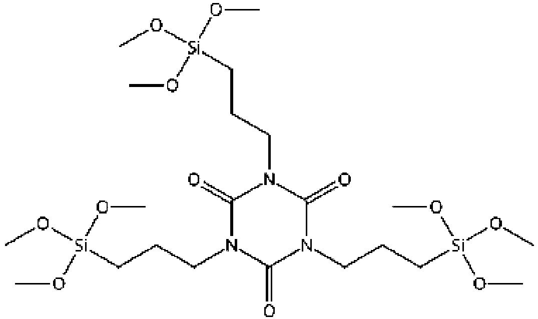

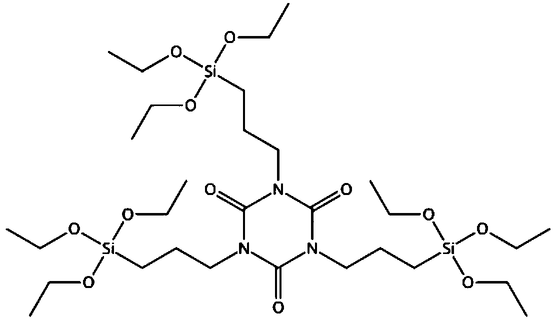

10. Zusammensetzung nach Anspruch 8, **dadurch gekennzeichnet, dass** die Verbindungen mit der Formel (V-A) aus den folgenden Verbindungen ausgewählt sind:

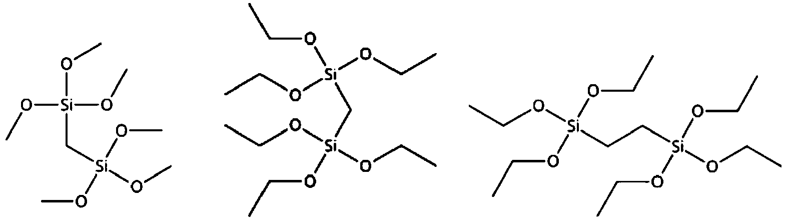

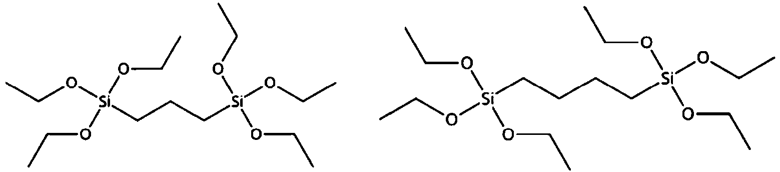

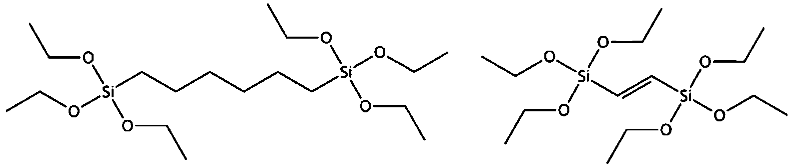

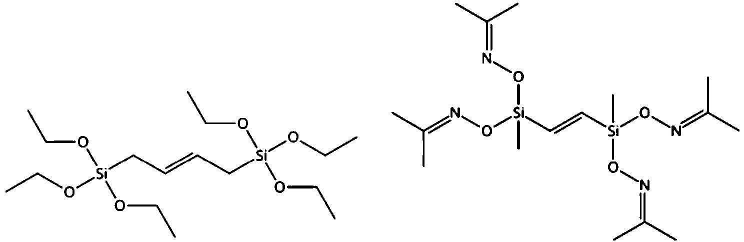

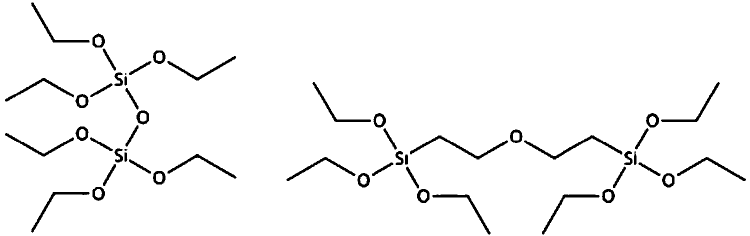

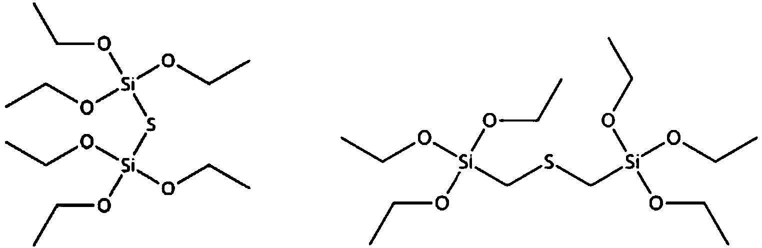

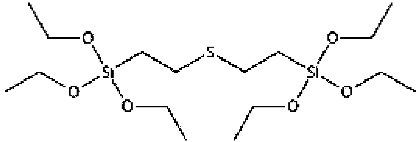

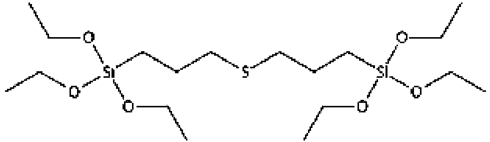

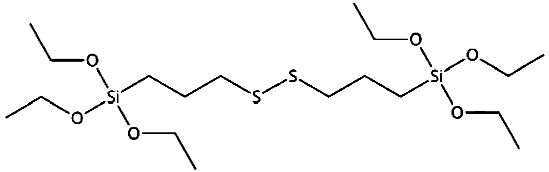

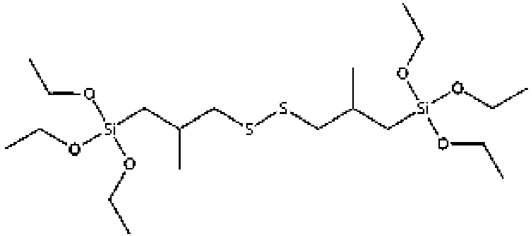

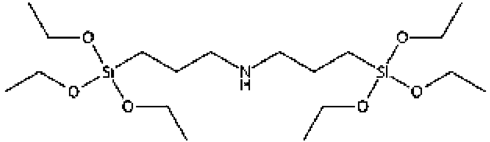

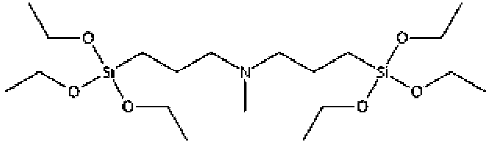

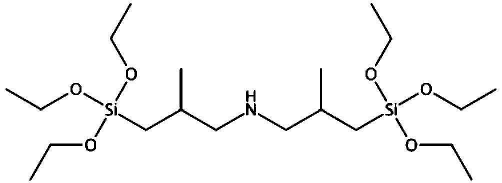

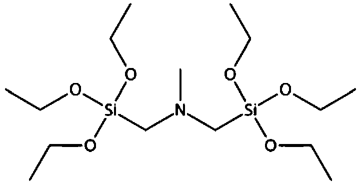

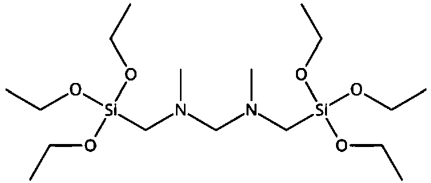

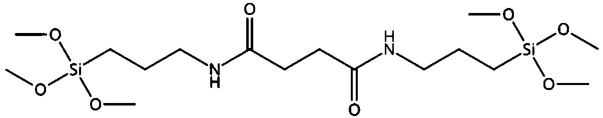

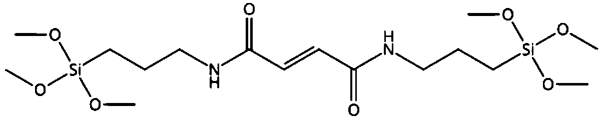

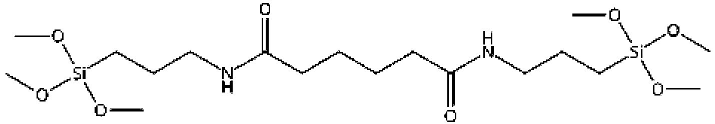

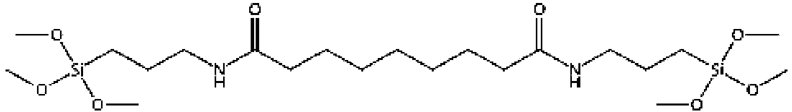

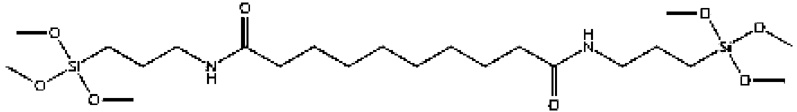

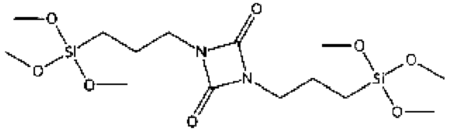

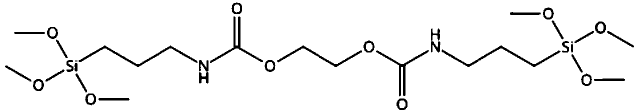

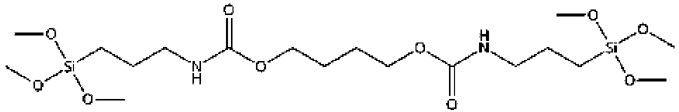

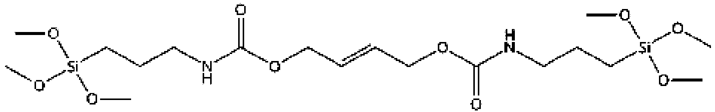

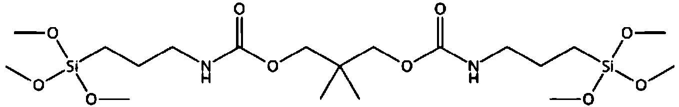

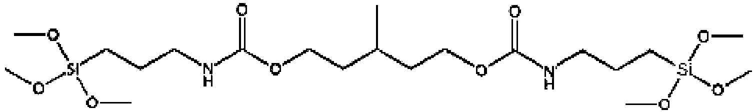

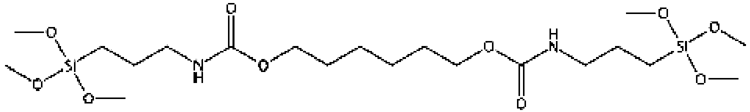

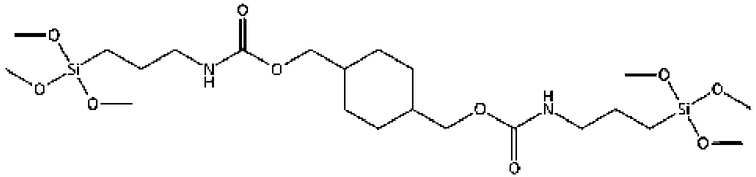

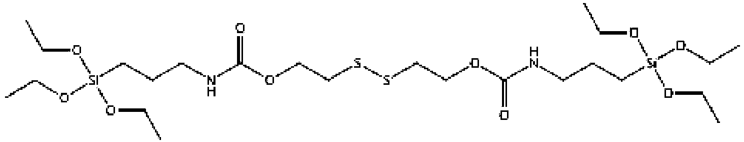

11. Zusammensetzung nach einem der Ansprüche 1 bis 10, **dadurch gekennzeichnet, dass** sie einen Gesamtgehalt an Bis(alkoxysilan)(en) oder Tri(alkoxysilan)(en) (C) von 0,1 bis 20 Gew.-%, bevorzugt von 0,2 bis 10 Gew.-%, vorzugsweise von 0,5 bis 5 Gew.-% und noch vorteilhafterweise von 1 bis 3 Gew.-% bezogen auf das Gesamtgewicht der Zusammensetzung umfasst.

12. Zusammensetzung nach einem der Ansprüche 1 bis 11, **dadurch gekennzeichnet, dass** der carbonathaltige Füllstoff aus den Alkalimetall- oder Erdalkalimetallcarbonaten und ihren Mischungen ausgewählt ist, der carbonathaltige Füllstoff bevorzugt Calciumcarbonat ist.

13. Zusammensetzung nach einem der Ansprüche 1 bis 12, **dadurch gekennzeichnet, dass** sie umfasst:
- 10 bis 60 Gew.-% Polymer(e) (A), umfassend mindestens eine Alkoxysilangruppe;
- 25 bis 70 Gew.-% carbonathaltige(n) Füllstoff(e) (B);
- 0,01 bis 5 Gew.-% Bis(alkoxysilan) (e) oder Tri(alkoxysilan) (e) (C) mit einer molaren Masse von 250 bis 1 000 g/mol;
- 0,01 bis 1 Gew.-% Vernetzungskatalysator(en) (D); wobei die Prozentsätze als gewichtsprozentuale Anteile bezogen auf das Gesamtgewicht der Zusammensetzung angegeben sind.

14. Verwendung der Zusammensetzung nach einem der Ansprüche 1 bis 13 als Klebstoff, Dichtstoff oder Beschichtung.

15. Verwendung einer aus Bis(alkoxysilan) und Tri(alkoxysilan) ausgewählten Verbindung (C) mit einer molaren Masse von 250 bis 1 000 g/mol in einer Zusammensetzung, umfassend:
- mindestens ein Polymer (A), das mindestens eine Alkoxysilangruppe umfasst;
- mindestens 25 Gew.-% eines carbonathaltigen Füllstoffs (B) bezogen auf das Gesamtgewicht der Zusammensetzung; zur Verbesserung der Alterungsbeständigkeit der Zusammensetzung nach Vernetzung.

## Claims

1. Moisture-crosslinkable composition comprising:
- at least one polymer (A) comprising at least one alkoxysilane group;
- at least 25% by weight of at least one carbonate filler (B) relative to the total weight of said composition;
- at least one compound chosen from bis(alkoxysilane)s or tri(alkoxysilane)s (C) having a molar mass ranging from 250 to 1000 g/mol;
- at least one crosslinking catalyst (D);
said composition being **characterized in that** it comprises a plasticizer content of less than or equal to 1% by weight relative to the total weight of the composition.

2. Composition according to Claim 1, wherein the polymer (A) comprising at least one alkoxysilane group is a polymer comprising at least one, preferably at least two, groups of formula (I):
-Si(R⁴)ₚ(OR⁵)₃₋ₚ (I)
wherein:
- R⁴ represents a linear or branched alkyl radical comprising from 1 to 4 carbon atoms, or an alkoxy group comprising from 1 to 4 carbon atoms;
- R⁵ represents a linear or branched alkyl radical comprising from 1 to 4 carbon atoms or a group -N=C(Rⁱ)R^{j} wherein:
- Rⁱ is a radical chosen from a hydrogen atom, a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- R^{j} is a radical chosen from a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- or Rⁱ and R^{j} together form an aliphatic ring comprising from 3 to 14 carbon atoms, preferably from 4 to 8 carbon atoms, said aliphatic ring being optionally substituted with at least one alkyl group comprising from 1 to 4 carbon atoms, and said ring optionally comprising one or more heteroatoms chosen from an oxygen atom, a sulfur atom or a nitrogen atom, said nitrogen atom then not being bonded to a hydrogen atom;
- p is an integer equal to 0, 1 or 2.

3. Composition according to either one of Claims 1 and 2, wherein the silylated polymer (A) comprising at least one alkoxysilane group is chosen from the polymers of formulae (II), (III) or (IV) as defined below, and mixtures thereof:
(R⁵O)₃₋ₚ(R⁴)ₚSi-R⁰-[OR²]ₙ-R⁰-Si(R⁴)p(OR⁵)₃₋ₚ (II) 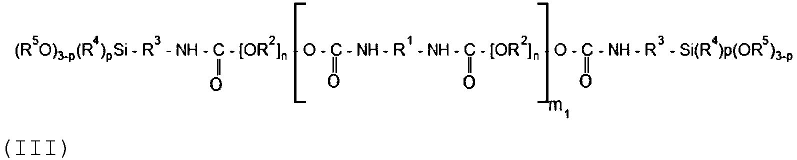 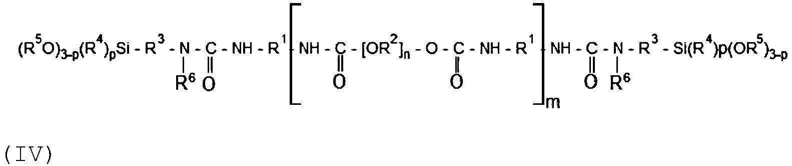
wherein:
- R¹ represents a divalent hydrocarbon-based radical comprising from 5 to 15 carbon atoms which can be aromatic or aliphatic and linear, branched or cyclic,
- R⁰ represents a linear or branched divalent alkylene radical comprising from 3 to 6 carbon atoms,
- R³ represents a linear or branched divalent alkylene radical comprising from 1 to 6 carbon atoms, R³ preferably representing methylene or n-propylene,
- R² represents a linear or branched divalent alkylene radical comprising from 2 to 14 carbon atoms, preferably from 2 to 6 carbon atoms, and even more preferentially from 2 to 4 carbon atoms,
- R⁴ represents a linear or branched alkyl radical comprising from 1 to 4 carbon atoms, or an alkoxy group comprising from 1 to 4 carbon atoms;
- R⁵ represents a linear or branched alkyl radical comprising from 1 to 4 carbon atoms or a group -N=C(Rⁱ)R^{j} wherein:
- Rⁱ is a radical chosen from a hydrogen atom, a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- R^{j} is a radical chosen from a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- or Rⁱ and R^{j} together form an aliphatic ring comprising from 3 to 14 carbon atoms, preferably from 4 to 8 carbon atoms, said aliphatic ring being optionally substituted with at least one alkyl group comprising from 1 to 4 carbon atoms, and said ring optionally comprising one or more heteroatoms chosen from an oxygen atom, a sulfur atom or a nitrogen atom, said nitrogen atom then not being bonded to a hydrogen atom;
- R⁶ represents a hydrogen atom, a phenyl radical, a linear, branched or cyclic alkyl radical comprising from 1 to 6 carbon atoms, or a 2-succinate radical of formula: 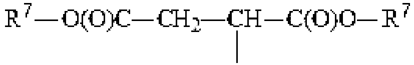 wherein R⁷ is a linear or branched alkyl radical comprising from 1 to 6 carbon atoms,
- n is an integer such that the number-average molecular weight of the polyether block of formula -[OR²]ₙ- ranges from 300 g/mol to 40 000 g/mol in the polymers of formulae (II), (III) and (IV),
- m₁ is zero or an integer,
- n and m₁ are such that the number-average molecular weight of the polymer of formula (III) ranges from 500 g/mol to 50 000 g/mol, preferably from 700 g/mol to 20 000 g/mol,
- m is an integer other than zero,
- n and m are such that the number-average molecular weight of the polymer of formula (IV) ranges from 500 g/mol to 50 000 g/mol, preferably from 700 g/mol to 20 000 g/mol,
p is an integer equal to 0, 1 or 2, p preferably being 0 or 1.

4. Composition according to any one of Claims 1 to 3, wherein the polymer (A) is chosen from the polymers of formula (II):
(R⁵O)₃₋ₚ(R⁴)ₚSi-R⁰-[OR²]ₙ-R⁰-Si(R⁴)p(OR⁵)₃₋ₚ (II)
wherein:
- R⁰ represents a linear or branched divalent alkylene radical comprising from 3 to 6 carbon atoms,
- R² represents a linear or branched divalent alkylene radical comprising from 2 to 14 carbon atoms, preferably from 2 to 6 carbon atoms, and even more preferentially from 2 to 4 carbon atoms,
- R⁴ represents a linear or branched alkyl radical comprising from 1 to 4 carbon atoms, or an alkoxy group comprising from 1 to 4 carbon atoms;
- R⁵ represents a linear or branched alkyl radical comprising from 1 to 4 carbon atoms or a group -N=C(Rⁱ)R^{j} wherein:
- Rⁱ is a radical chosen from a hydrogen atom, a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- R^{j} is a radical chosen from a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- or Rⁱ and R^{j} together form an aliphatic ring comprising from 3 to 14 carbon atoms, preferably from 4 to 8 carbon atoms, said aliphatic ring being optionally substituted with at least one alkyl group comprising from 1 to 4 carbon atoms, and said ring optionally comprising one or more heteroatoms chosen from an oxygen atom, a sulfur atom or a nitrogen atom, said nitrogen atom then not being bonded to a hydrogen atom;
p is an integer equal to 0, 1 or 2, p preferably being 0 or 1.

5. Composition according to any one of Claims 1 to 4, **characterized in that** it comprises from 3% to 80% by weight, preferably from 10% to 60% by weight, preferentially from 20% to 60% by weight and advantageously from 30% to 60% by weight of silylated polymer (s) (A) relative to the total weight of said composition.

6. Composition according to any one of Claims 1 to 5, **characterized in that** the bis(alkoxysilane) or tri (alkoxysilane) (C) has the following formula (V):
R⁸-[SiR⁹ₜ(OR¹⁰)₃₋ₜ]ₛ (V)
wherein:
- t represents an integer equal to 0, 1 or 2;
- s represents an integer equal to 2 or 3;
- R⁸ represents an organic radical;
- R⁹, which may be identical or different, each represent a linear or branched C1-C6 alkyl group, or an -OR¹¹ group with R¹¹ representing a linear or branched C1-C4 alkyl group;
- R¹⁰, which may be identical or different, each represent a linear or branched alkyl radical comprising from 1 to 4 carbon atoms or an -N=C(Rⁱ)R^{j} group wherein:
- Rⁱ is a radical chosen from a hydrogen atom, a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- R^{j} is a radical chosen from a linear or branched alkyl radical comprising from 1 to 10 carbon atoms, a linear or branched alkenyl radical comprising from 2 to 10 carbon atoms, a cyclic alkyl radical comprising from 3 to 10 carbon atoms, an aryl radical comprising from 6 to 12 carbon atoms, or a radical -CH₂-N(G¹G²) where G¹ and G² represent, independently of one another, a linear or branched alkyl radical comprising from 1 to 10 carbon atoms or a linear or branched alkenyl radical comprising from 2 to 10 carbon atoms or a benzyl radical;
- or Rⁱ and R^{j} together form an aliphatic ring comprising from 3 to 14 carbon atoms, preferably from 4 to 8 carbon atoms, said aliphatic ring being optionally substituted with at least one alkyl group comprising from 1 to 4 carbon atoms, and said ring optionally comprising one or more heteroatoms chosen from an oxygen atom, a sulfur atom or a nitrogen atom, said nitrogen atom then not being bonded to a hydrogen atom.

7. Composition according to any one of Claims 1 to 6, **characterized in that** the bis(alkoxysilane) or tri(alkoxysilane) (C) has a molar mass ranging from 270 to 1000 g/mol, preferentially from 270 to 750 g/mol, even more preferentially from 270 to 600 g/mol.

8. Composition according to any one of Claims 1 to 7, **characterized in that** the bis(alkoxysilane) or tri(alkoxysilane) (C) has either of the following formulae (V-A) or (V-B):
(R¹⁰O)₃₋ₜR⁹ₜSi-R¹²-SiR⁹ₜ(OR²⁰)₃₋ₜ (V-A)
R¹³-[SiR⁹ₜ(OR¹⁰)₃₋ₜ]₃ (V-B)
wherein:
- R⁹, R¹⁰ and t are as defined in Claim 6;
- R¹² represents an oxygen atom, a linear or branched C1-C12 alkylene radical, a C6-C12 arylene radical, or a linear or branched C2-C12 alkenylene radical, said alkylene and alkenylene radicals optionally comprising one or more radicals chosen from -O-, -S-, -NR- with R representing H or a group that is alkyl, -C(=O)-O- or - O-C(=O), -C(O)-NR'- or -NR'-C(=O) with R' representing H or a group that is alkyl, -O-C(=O)-NH- or -NH-C(=O)-O- or uretdione;
- R¹³ represents a radical: 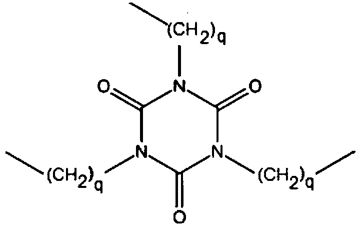 with q representing an integer ranging from 1 to 10.

9. Composition according to Claim 8, **characterized in that** the compounds of formula (V-B) are chosen from the following compounds:

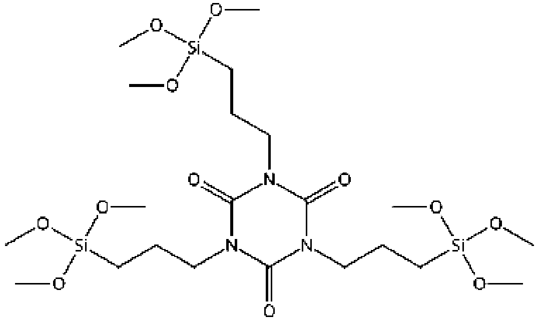

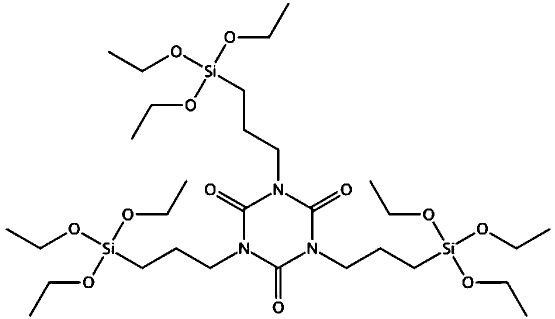

10. Composition according to Claim 8, **characterized in that** the compounds of formula (V-A) are chosen from the following compounds:

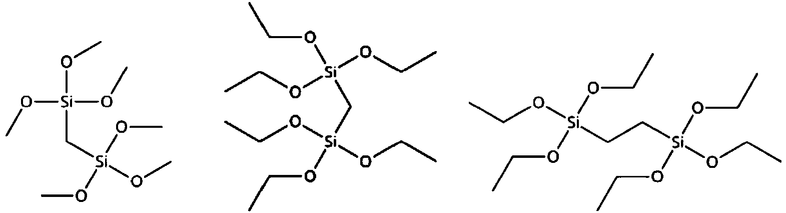

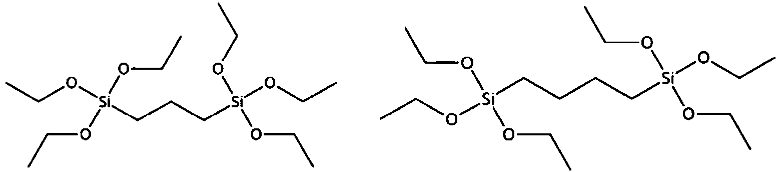

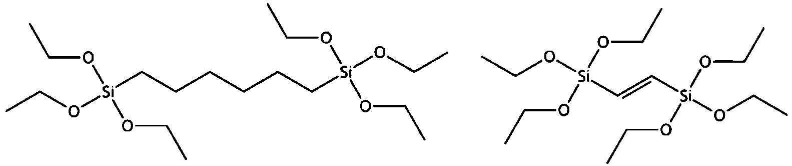

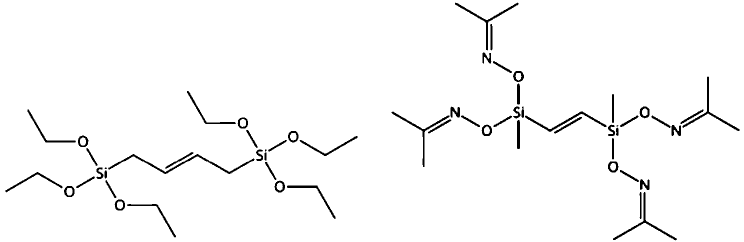

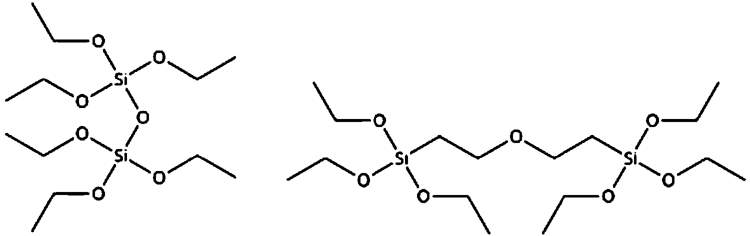

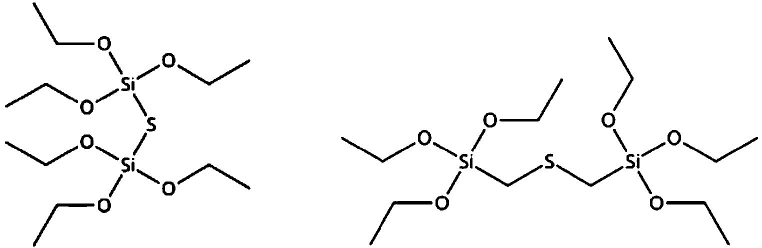

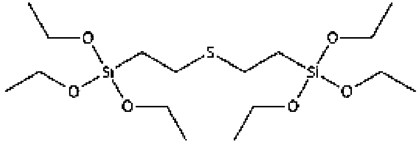

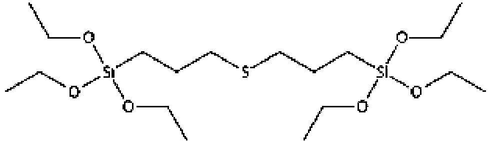

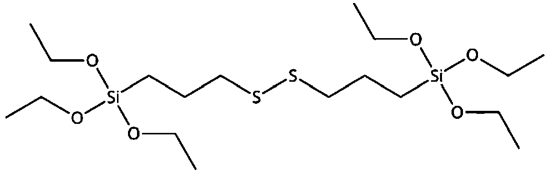

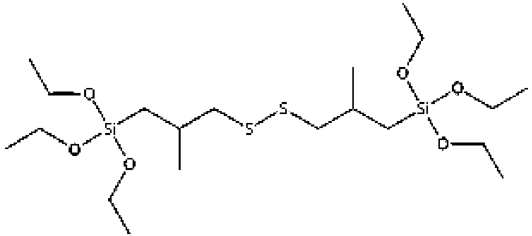

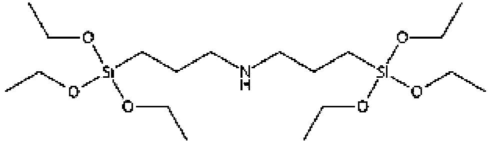

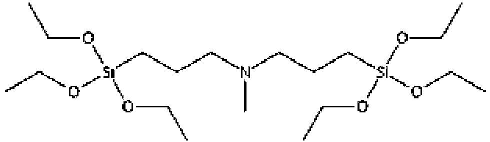

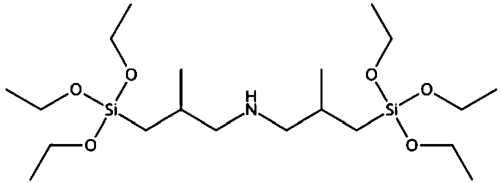

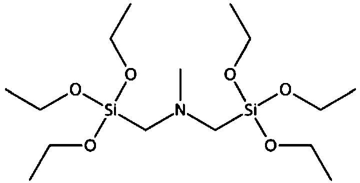

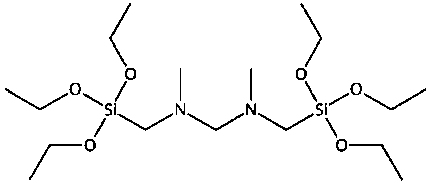

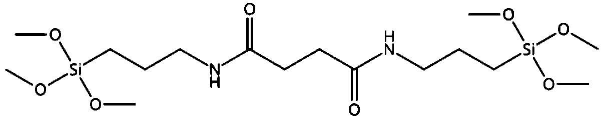

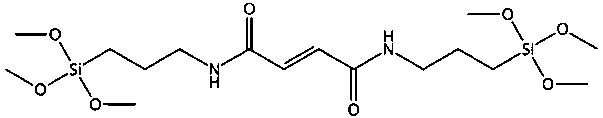

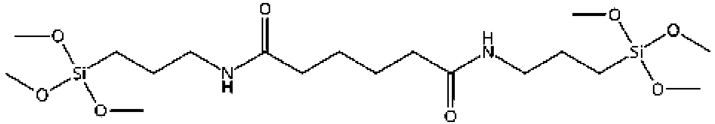

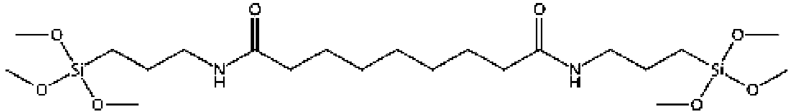

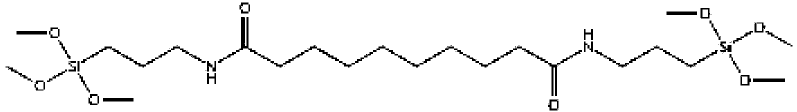

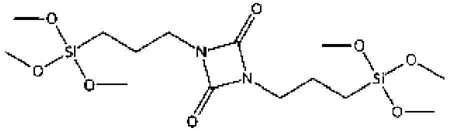

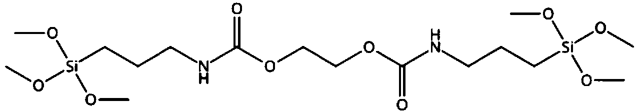

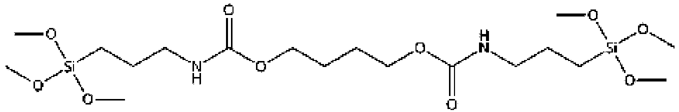

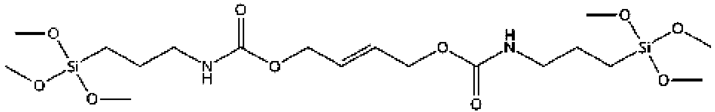

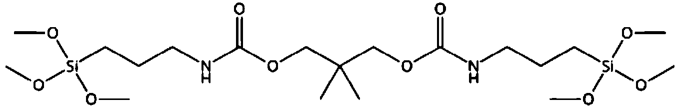

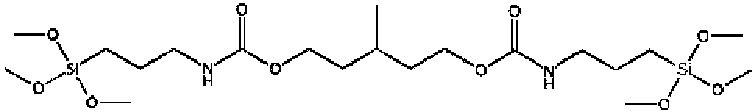

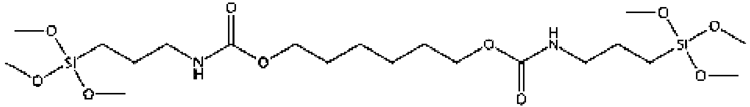

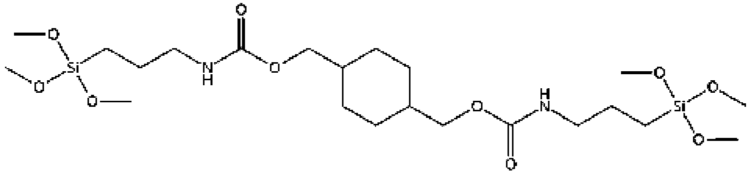

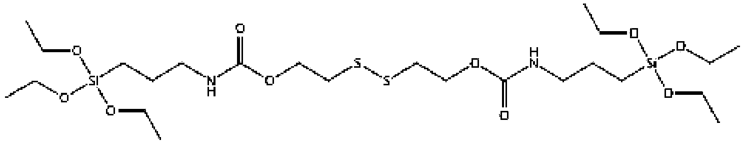

11. Composition according to any one of Claims 1 to 10, **characterized in that** it comprises a total content of bis(alkoxysilane) (s) or tri(alkoxysilane)(s) (C) ranging from 0.1% to 20% by weight, preferably from 0.2% to 10% by weight, preferentially from 0.5% to 5% by weight, and even more advantageously from 1% to 3% by weight relative to the total weight of the composition.

12. Composition according to any one of Claims 1 to 11, **characterized in that** the carbonate filler is chosen from alkali metal or alkaline earth metal carbonates and mixtures thereof; preferably, the carbonate filler is calcium carbonate.

13. Composition according to any one of Claims 1 to 12, **characterized in that** it comprises:
- from 10% to 60% by weight of polymer(s) (A) comprising at least one alkoxysilane group;
- from 25% to 70% by weight of carbonate filler(s) (B);
- from 0.01% to 5% by weight of bis(alkoxysilane) (s) or tri (alkoxysilane) (s) (C) having a molar mass ranging from 250 to 1000 g/mol;
- from 0.01% to 1% by weight of crosslinking catalyst(s) (D);
the percentages being expressed by weight relative to the total weight of said composition.

14. Use of the composition according to any one of Claims 1 to 13, as adhesive, sealant or coating.

15. Use of a compound (C) chosen from bis (alkoxysilane) s and tri(alkoxysilane)s having a molar mass ranging from 250 to 1000 g/mol in a composition comprising:
- at least one polymer (A) comprising at least one alkoxysilane group;
- at least 25% by weight of a carbonate filler (B) relative to the total weight of said composition;
for improving the resistance to ageing of the composition after crosslinking.
